# EUROPEAN PATENT SPECIFICATION

(11) **EP 1 621 359 B1**
(45) Date of publication and mention of the grant of the patent: **02.01.2008**
(21) Application number: 05013348.7
(22) Date of filing: 21.06.2005
(51) Int. Cl.: B41M 5/52

(54) **Recording medium and its method of manufacture**
Aufzeichnungsmaterial und Verfahren zur Herstellung
Matériau pour l'enregistrement et méthode pour sa fabrication

(30) Priority: 26.07.2004 JP 2004216913
(43) Date of publication of application: 01.02.2006
(73) Proprietor: FUJIFILM Corporation, Minato-ku Tokyo (JP)
(72) Inventor: Tojo, Kaoru, Fuji Photo Film Co., Ltd, Fujinomiya-shi Shizuoka (JP); Taguchi, Toshiki, Fuji Photo Film Co., Ltd, Fujinomiya-shi Shizuoka (JP); Yabuki, Yoshiharu, Fuji Photo Film Co., Ltd, Minami-Ashigara-shi Kanagawa (JP); Suzuki, Makoto, Fuji Photo Film Co., Ltd, Asaka-shi Saitama (JP)
(74) Representative: HOFFMANN EITLE

(56) References cited:
- EP-A- 0 251 282
- US-A- 4 877 922
- US-A1- 2002 119 295
- US-A1- 2003 179 269
- PATENT ABSTRACTS OF JAPAN vol. 2000, no. 21, 3 August 2001 (2001-08-03) & JP 2001 088430 A (KIMOTO & CO LTD), 3 April 2001 (2001-04-03)

## Description

### Technical Field

The present invention relates to a recording medium providing for recording of images in liquid ink, such as water-base ink (using a dye or pigment as a coloring material) or oil-base ink, or solid ink which, though solid at room temperature, is liquefied by heat-fusion and used for printing, preferably for ink-jet recording. More specifically, the invention is concerned with a recording medium, preferably an ink-jet recording material, having excellent ozone-proof and light-fast properties and hardly causing a bronzing phenomenon.

### Background Art

In recent years, various information-processing systems have been developed as the information technology industry has made rapid strides. Recording methods and recording devices suitable for such information-processing systems have also been developed, and each of them is in practical use.

Of those recording methods, an ink-jet recording method has been widely used not only in offices but also at home because of its advantages that various kinds of materials can be used for recording and the hardware (apparatus) used therein is relatively low in price, compact in size and excellent in quietness.

In addition, with recent improvements in resolution of ink-jet printers it has become possible to obtain records of the so-called photograph-like print quality, and these recent advances of hardware (apparatus) have stimulated the development of various types of ink-jet recording materials.

In general the properties required for recording sheets used in ink-jet recording include properties of being able to ensure (1) rapid drying of ink (sufficient rapidity of ink absorption), (2) ink dots of proper and uniform diameter (no ink bleed), (3) satisfactory graininess, (4) ink dots of high roundness, (5) high color densities, (6) high saturation (no color subsidence), (7) satisfactory imperviousness to water, light and ozone in printed areas, (8) high whiteness in themselves, (9) satisfactory keeping quality in themselves (occurrence of neither yellow coloration even in storage over a prolonged period nor image blur due to long-term storage (ageing-induced blur)), (10) high resistance to deformation and satisfactory dimensional stability (sufficiently loose curling), and (11) satisfactory hard-running performance.

In using photographic high-gloss paper for the purpose of obtaining records of the so-called photograph-like quality, glossiness, surface smoothness and a photographic-paper feeling similar to that of silver salt photograph are required in addition to the aforementioned properties.

For the purpose of improving those various properties, ink-jet recording materials having porous structures in their ink-receiving layers have been developed in recent years, and put to practical use. By having porous structures, these ink-jet recording materials can achieve high ink receptivity (fast-drying property) and high glossiness.

For instance, JP-A-10-119423 and JP-A-10-217601 propose the ink-jet recording materials wherein their individual supports are each provided with an ink-receiving layer having a high porosity by containing a particulate inorganic pigment and a water-soluble resin.

Because of their makeup, those recording materials, notably the ink-jet recording material provided with an ink-receiving layer of porous structure using silica as a particulate inorganic pigment, have excellent ink absorption and high ink-receiving power capable of forming images of high resolution, and can show high glossiness.

On the other hand, when recorded images of high optical densities are formed, it is known that a problem of the so-called bronzing phenomenon comes up, namely a phenomenon in which the dyes in ink crystallize out on the surface of a recording material as the ink dries; as a result, the recorded images reflect light and take on a metallic luster. This phenomenon is more likely to occur when the dye solubility in water is lowered or a hydrogen bond-forming group is introduced into the dye structure with the intention of enhancing water resistance, light resistance or gas resistance. Since reflection and scattering of light is caused by the bronzing phenomenon, the optical densities of images are lowered, and besides, the recorded images come to have hues significantly different from the intended ones or lost their transparency. Therefore, inhibition of the bronzing phenomenon is one of important requirements for ink-jet ink.

Examples of a hitherto known method for inhibition of the bronzing phenomenon include the methods for size control (as disclosed in JP-A-8-108616, JP-A-8-169173, JP-A-8-267908 and JP-A-2001-64893), the method of adding a specified heterocyclic compound (See JP-A-2001-88430), the method of adding a specified amine compound (See JP-A-2000-53765) and the method of adding a specified salt (See JP-A-2000-309156). However, there may be cases wherein the addition of those additives in increased amounts is required because of their insufficient effects in preventing the bronzing phenomenon from occurring, or the addition of those additives causes a storage-stability problem; as a result, the additives cause deteriorations in various properties of a recording medium and in recorded-image quality.

Although the use of additives can produce various effects as mentioned above, it is difficult to use usual additives while keeping various properties. For instance, when an image-receiving paper is designed to enhance weather resistance of recorded images through acceleration of dye association, the addition of an additive capable of loosening the dye association with the intention of preventing the occurrence of the bronzing phenomenon seriously impairs the keeping quality of recorded images even though it yields an improvement in the bronzing phenomenon. So it is understandable that there are difficulties in choosing amounts and kinds of additives to be added in such a case as to require a consideration of dye-associated conditions in particular. When ionic additives are used, on the other hand, it is required to take account of the influences of counter ions. Therefore, it has been desired to develop molecular designs of additives on the basis of a new concept and to introduce a method of inhibiting in a substantial sense the bronzing phenomenon by use of the additives developed.

### Disclosure of the Invention

An first object of the invention is to provide a recording medium capable of forming images free of the bronzing phenomenon while keeping various excellent properties, including high density of printed images, excellent hue and high resistances to light, gas and water.

The foregoing first object of the invention is achieved by first invention described below:
[1] A recording medium comprising a compound in which at least 10 atoms having conjugate π electrons are present on a per-molecule basis, wherein the compound shows no fluorescence and has a longest-wavelength-side absorption peak λmax at a wavelength of 350 nm or shorter and a molar absorption constant of 10,000 or below at any of wavelengths within a visible spectral region of 400 to 700 nm and wherein the compound further contains a solubilizing group.
[2] A recording medium as described in [1], wherein the compound has at least two aromatic ring groups.
[3] A recording medium as described in any of [1] to [2], which has an ink-receiving layer provided on a support.
[4] A recording medium as described in [3], which comprises the compound in the ink-receiving layer.
[5] A recording medium as described in [4], wherein the ink-receiving layer further comprises a water-soluble resin.
[6] A recording medium as described in [5], wherein the water-soluble resin is at least one resin selected from polyvinyl alcohol resins, cellulose resins, ether linkage-containing resins, carbamoyl group-containing resins, carboxyl group-containing resins or gelatins.
[7] A recording medium as described in [4] or [5], wherein the ink-receiving layer further contains a cross-linking agent capable of forming cross-links between molecules of the water-soluble resin.
[8] A recording medium as described in any of [3] to [7], wherein the ink-receiving layer further comprises a particulate substance.
[9] A recording medium as described in [8], wherein the particulate substance is at least one substance selected from particulate silica, colloidal silica, particulate alumina or pseudo boehmite.
[10] A recording medium as described in any of [3] to [9], wherein the ink-receiving layer further comprises a mordant.
[11] A recording medium as described in any of [3] to [10], wherein the ink-receiving layer further comprises a compound having at least two species of di- or higher-valent metal atoms per molecule.
[12] A recording medium as described in any of [1] to [11], which is an ink-jet recording material.
[13] A method of producing a recording medium as described in any of [1] to [14], the method comprising forming a coating layer as an ink-receiving layer by: applying a coating solution containing at least a particulate substance and a water-soluble resin; and curing the applied coating solution by formation of cross-links, wherein the curing by formation of cross-links is carried out by: adding a cross-linking agent to at least one of the coating solution and a basic solution of pH 7.1 or higher; and applying the basic solution to the coating layer (1) simultaneously with formation of the coating layer by applying the coating solution or (2) during drying of the coating layer formed by applying the coating solution and before the coating layer shows drying shrinkage.

### Best Mode For Carrying Out the Invention

An ink-jet recording material according to the invention is distinguished by formation of high-density images causing no bronzing phenomenon with various excellent properties including excellent hue and high resistances to light, gases and water.

The first invention is illustrated below in detail.

### (Compounds having at least 10 conjugate π electrons on per-molecule basis)

In the first place, compounds having 10 or more conjugate π electrons on a per-molecule basis are described.

As the number of π-electrons constituting a conjugated π-electron system is increased and the π-electron system is extended, there is a higher probability of causing absorption of light in the visible region. From the viewpoint of color reproduction of images, it is appropriate that the compounds characterizing the invention be colorless. The term "colorless compound" as used in the invention is intended to include compounds in a state that they are only slightly colored to the extent of having no adverse influences on image quality. In addition, the compounds may show fluorescence. However, the compounds showing no fluorescence are preferable in the invention, and the compounds have a longest-wavelength-side absorption peak λmax at a wavelength of 350 nm or shorter, preferably 320 nm or shorter, and a molar absorption constant of 10,000 or below at any of wavelengths within a visible spectral region of 400 to 700 nm.

The compounds according to the invention have 10 or more conjugate π electrons on a per-molecule basis. The number of π electrons has no particular upper limit, but it is preferably 80 or below, far preferably 50 or below, particularly preferably 30 or below. And 10 or more conjugate π electrons may form one big conjugated system, or may form two or more conjugated systems. The compounds especially preferred in the invention are compounds having at least two aromatic ring groups on a per-molecule basis. The term "aromatic ring group" used in the invention includes groups referred to as aromatic ring groups in a broad sense, and it may be an aryl group, an aromatic heterocyclic group containing hetero atoms or an aromatic ring group into which rings are formed by ring fusion. Examples of such an aromatic ring group include a benzene ring group, a naphthalene ring group, an anthracene ring group, a pyridine ring group, a pyrimidine ring group, a piperazine ring group and a triazine ring group.

The compounds used in the recording medium contains a solubilizing group.

It is especially advantageous that the compounds according to the invention have at least two solubilizing groups on a per-molecule basis. Examples of a useful solubilizing group include a sulfo group, a carboxyl group, a hydroxyl group, a phosphono group, a carbonamido group, a sulfonamido group, a quaternary ammonium salt and other groups well-known to persons skilled in the art, but the solubilizing groups the compounds can have are not limited to the groups recited above. Of those groups, more favorable groups are a sulfo group and a carboxyl group and the most favorable one is a sulfo group.

Although a maximum number of solubilizing groups in one molecule depends solely on the number of positions available to substituents, the presence of same or different 10 solubilizing groups in one molecule will suffice for practical purposes. The counter cations of those solubilizing groups have no particular restriction, but examples thereof include alkali metal ions, ammonium ion and organic cations (e.g., tetramethyl ammonium cation, guanidinium cation, pyridinium cation). As to these cations, favorable ones are alkali metal ions and ammonium ion and more favorable ones are lithium ion, sodium ion and ammonium ion, and most favorable ones are lithium ion and ammonium ion.

Examples of compounds according to the invention include the compounds described in JP-A-63-55544, JP-A-3-146947, JP-A-3-149543, JP-A-2001-201831, JP-A-2002-139822, JP-A-2002-196460, JP-A-2002-244257, JP-A-2002-244259, JP-A-2002-296743, JP-A-2002-296744 and JP-A-2003-307823.

Of those compounds, compounds represented by the following formula (1) are used to advantage:

A-X-L-(Y-B)n (1)

In formula (1), A, L and B each represent an aromatic group (an aryl group or an aromatic heterocyclic group). X and Y each represent a divalent linkage group. n represents 0 or 1. Herein, the aromatic group may be a single ring or a condensed ring, and the divalent linkage group is an alkylene group, an alkenylene group, -CO-, -SOn- (n=0, 1 or 2), -NR-(wherein R represents a hydrogen atom, an alkyl group, an aryl group or a heterocyclic group), -O- or a divalent group formed by combining two or more of the linkage groups recited above. However, the compound represented by formula (1) is required to have at least one ionic hydrophilic group selected from a sulfo group, a carboxyl group, a phenolic hydroxyl group or a phosphono group. These ionic hydrohilic groups may take salt forms, and have no particular restrictions as to their counter ions. Examples of such counter ions include alkali metal ions, ammonium ion and organic cations (such as tetramethyl ammonium, guanidinium and pyridinium cations). Of these cations, favorable ones are alkali metal ions and ammonium ion, especially lithium ion, sodium ion and ammonium ion, and the most favorable ones are lithium ion and ammonium ion.

The compounds represented by formula (1) may have substituents other than ionic hydrophilic groups. Examples of such substituents include alkyl groups, aryl groups, aralkyl groups, heterocyclic groups, alkoxy groups, aryloxy groups, a hydroxyl group, amino groups (including anilino and heterocyclylamino groups), acyl groups, acylamino groups, ureido groups, halogen atoms, sulfamoyl groups, carbamoyl groups, sulfonamido groups, sulfonyl groups, sulfenyl groups and sulfinyl groups. These groups may further have substituents. Of the compounds represented by formula (1), the compounds meeting the condition of n=1 are advantageous over the others. In addition, it is preferable that at least one of the aromatic groups A, L and B is an aromatic heterocyclic group. Further, the compounds containing 2 to 4 ionic hydrophilic groups on a per-molecule basis are preferred.

Although the mechanism of bronzing phenomenon inhibition is not clarified yet, it can be thought that the compounds according to the invention act as an agent for dissolving cohesion (a cohesion-dissolving agent) by exerting their stronger π-electron interactions on dyes forming cohesion (association) through the π-electron interaction between dye molecules, with the result that an improvement in bronzing phenomenon can be obtained. When a cohesion-dissolving agent intrudes itself between dye molecules in a state of cohesion or exert its strong π-electron interaction on dye molecules present at the surface of dye aggregates, it is important that the agent has a planar structure and a widely spread π-electron system. In addition, it is also important that the cohesion-dissolving agent has sufficient solubility for the agent itself or a complex formed of the agent and dyes to escape from deposition. Since the dyes used in ink-jet ink, typified by direct dyes, have widely spread planar structures with the intention of enhancing their fixing capabilities although the required number of π-electrons varies by the sizes of dyes in ink-jet ink used, it is supposed that the cohesion-dissolving agent is required to be a colorless compound having a stretch of conjugated system made up of 10 or more π electrons on a per-molecule basis.

Examples of compounds suitable for use in the invention include the compounds described in the documents cited above, specifically JP-A-2002-139822, JP-A-2002-196460, JP-A-2002-244257, JP-A-2002-244259, JP-A-2002-296743, JP-A-2002-296744 and JP-A-2003-307823. Representatives of these compounds (cohesion-dissolving agents) are illustrated below:

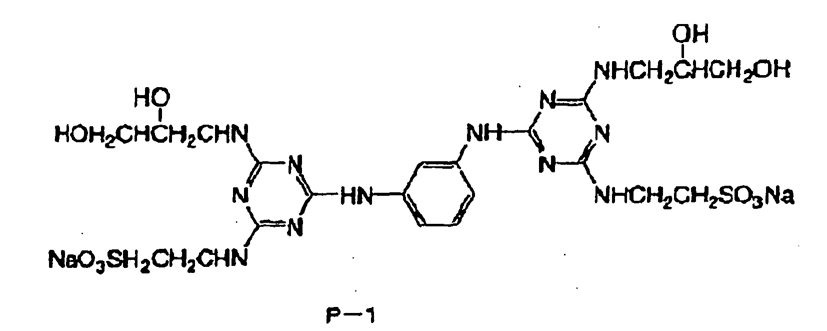

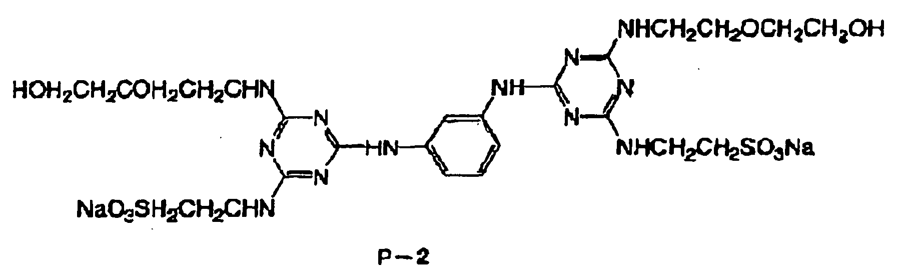

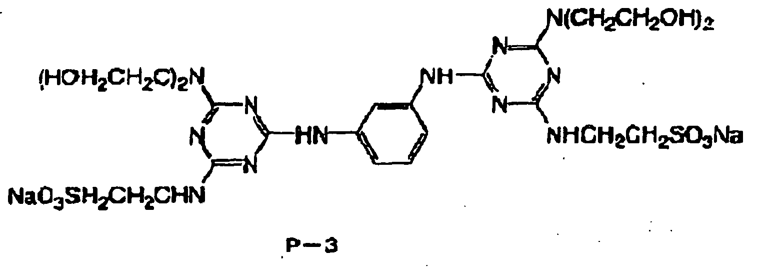

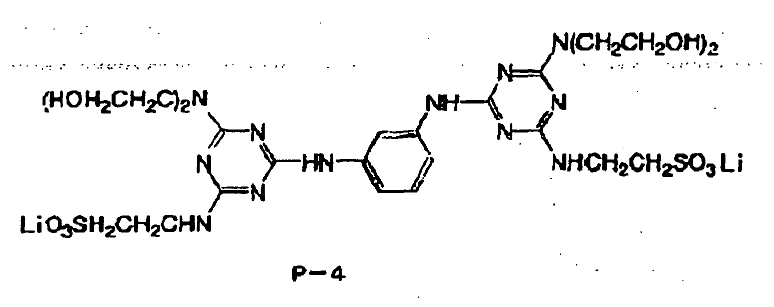

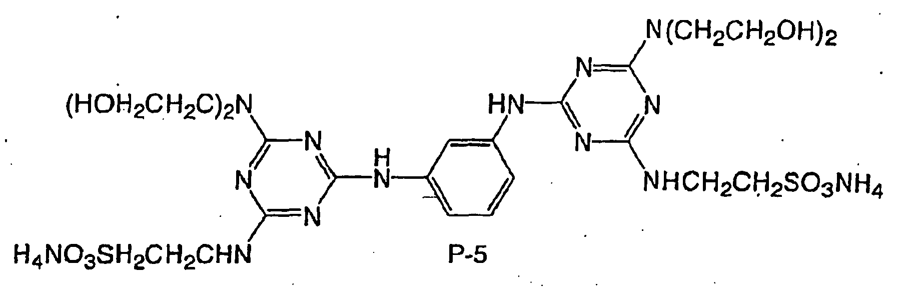

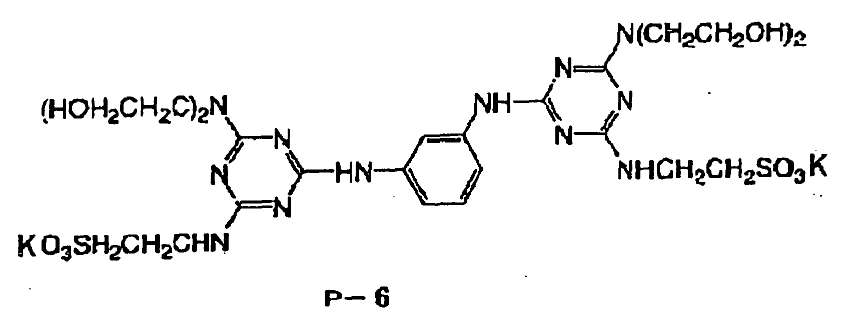

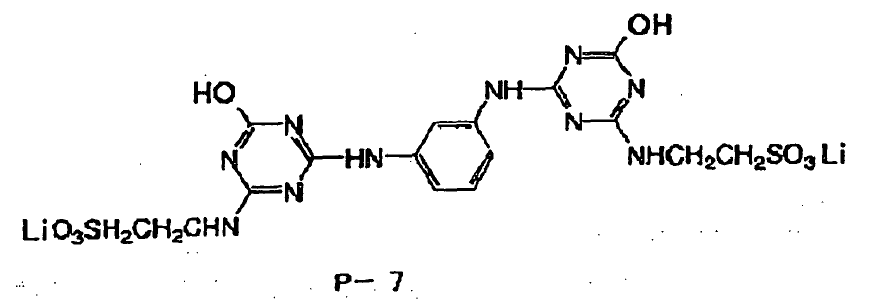

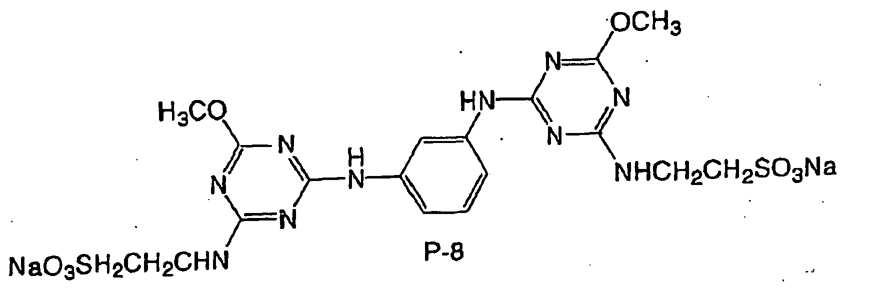

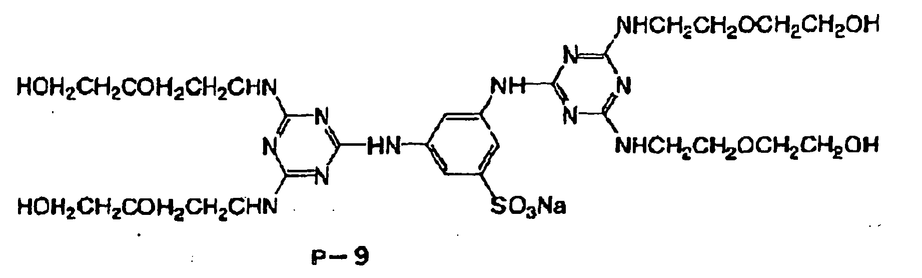

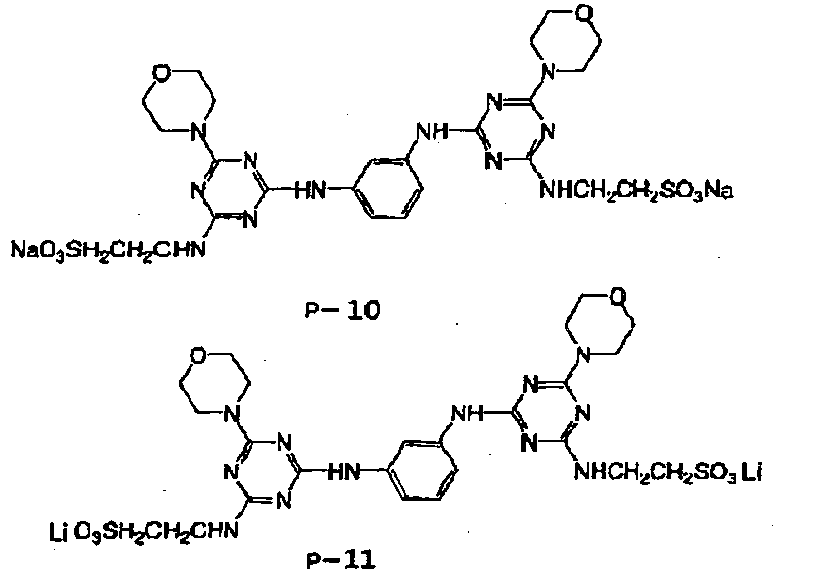

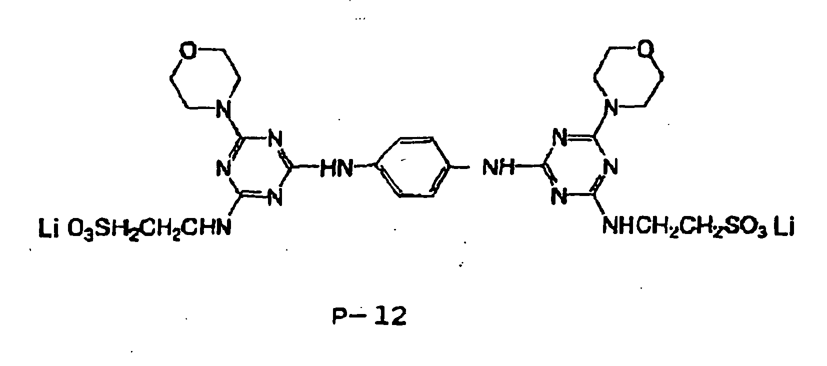

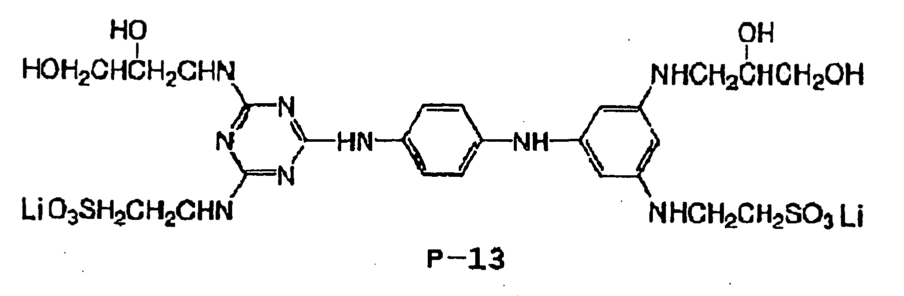

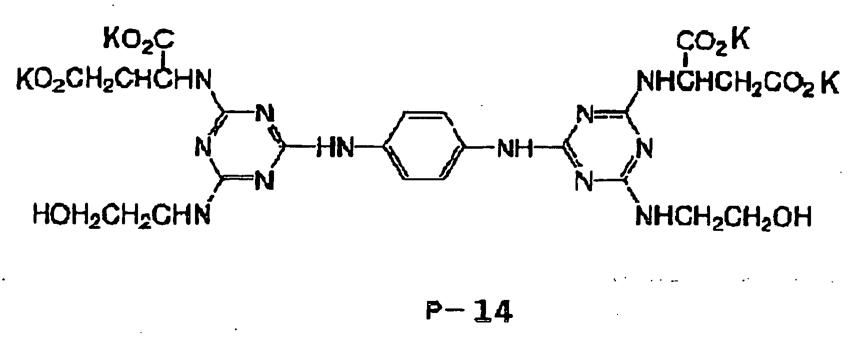

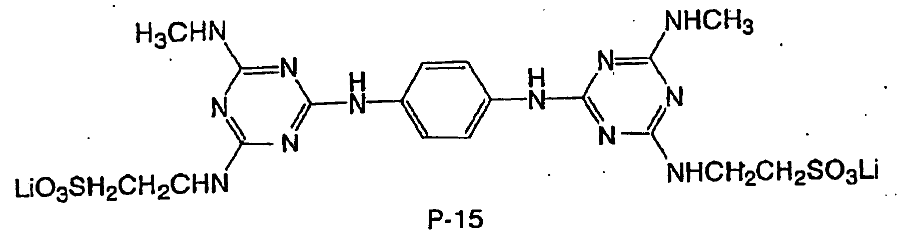

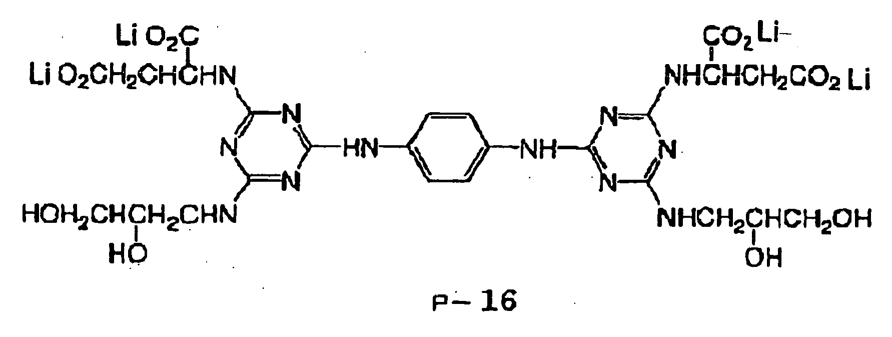

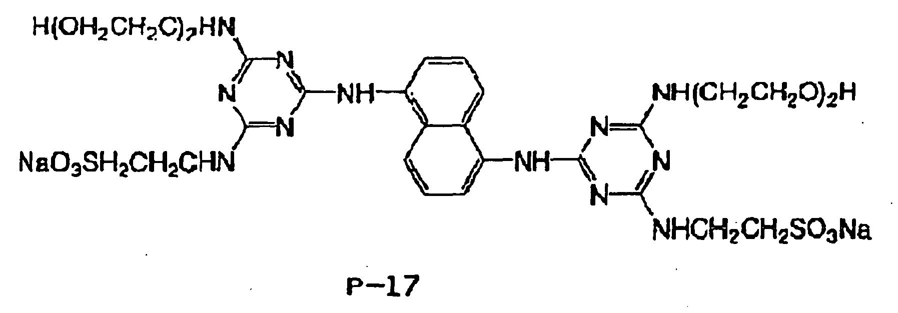

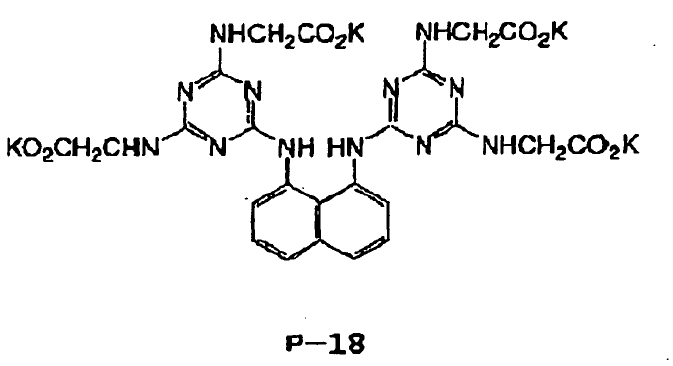

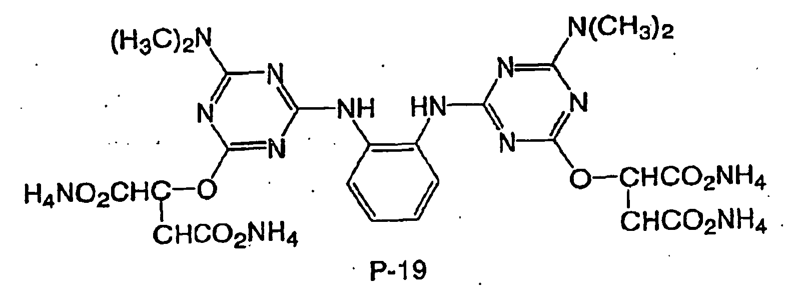

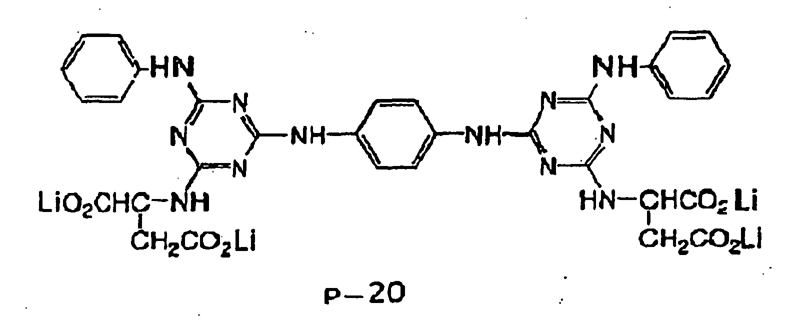

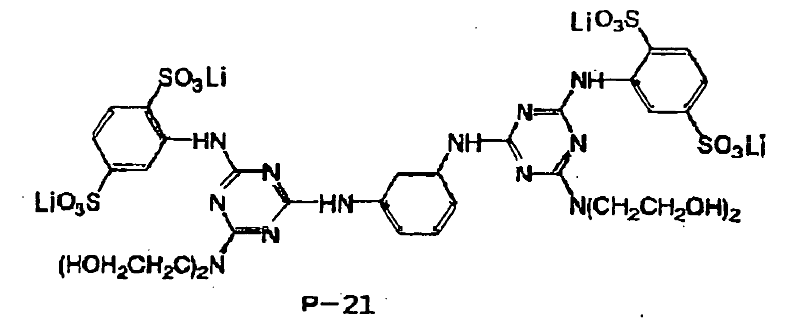

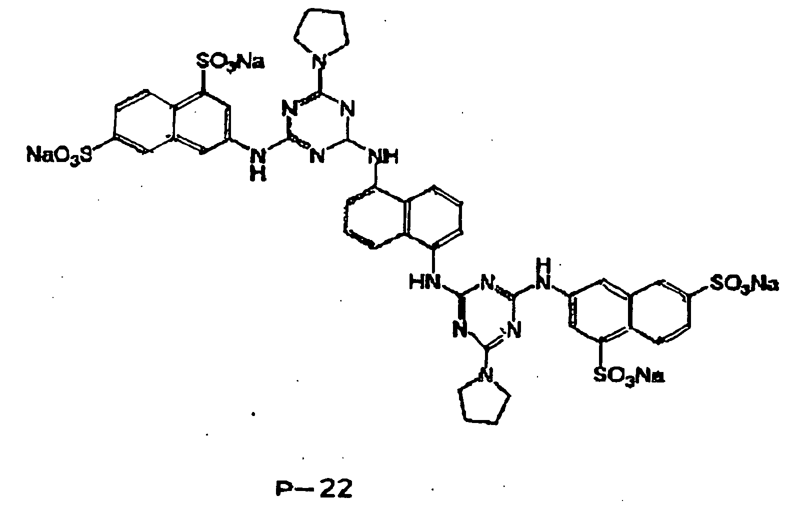

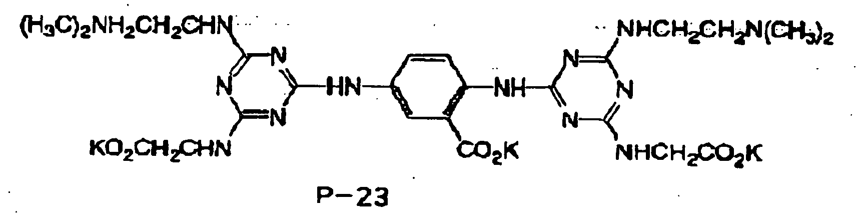

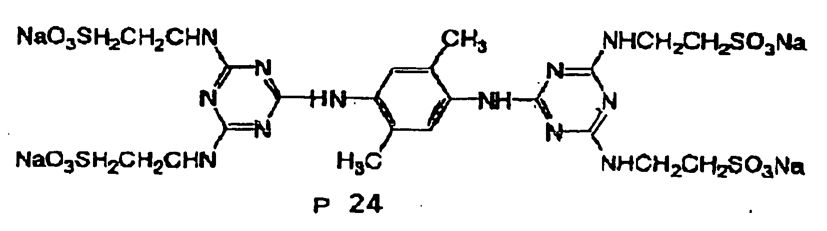

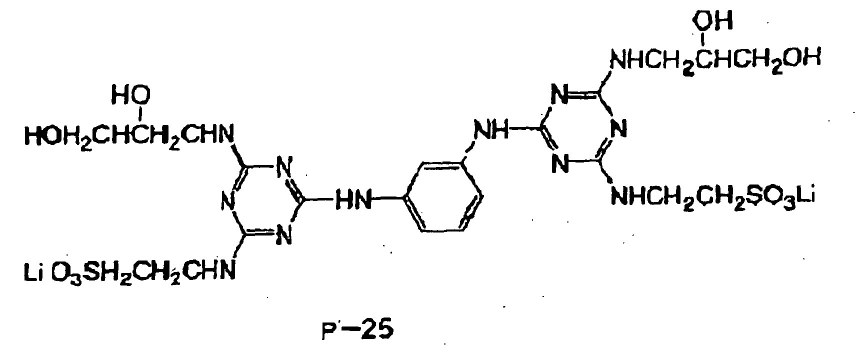

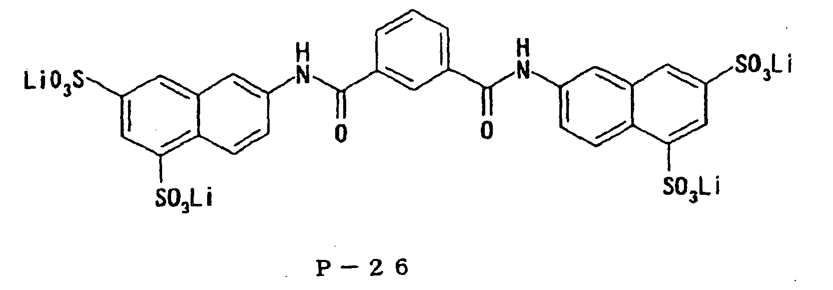

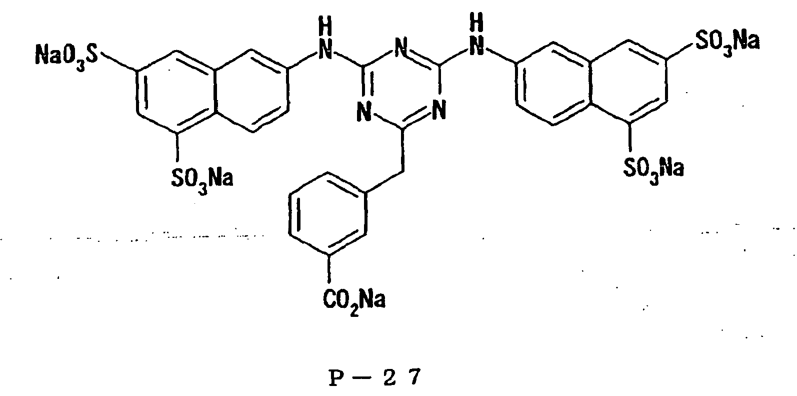

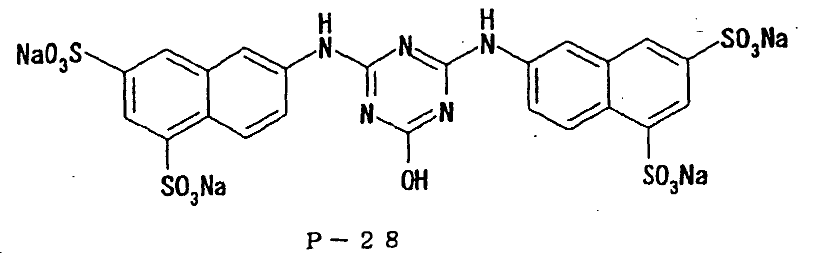

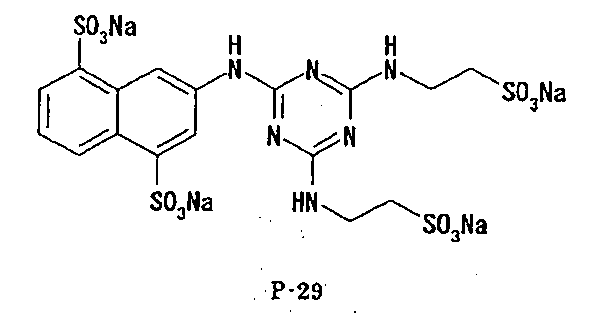

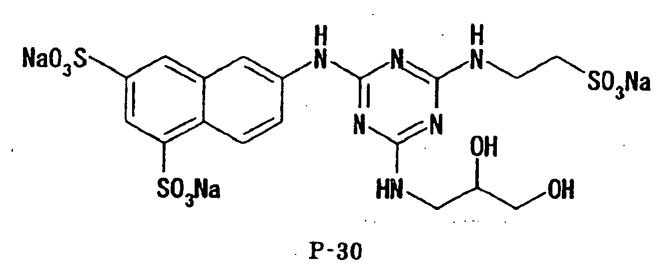

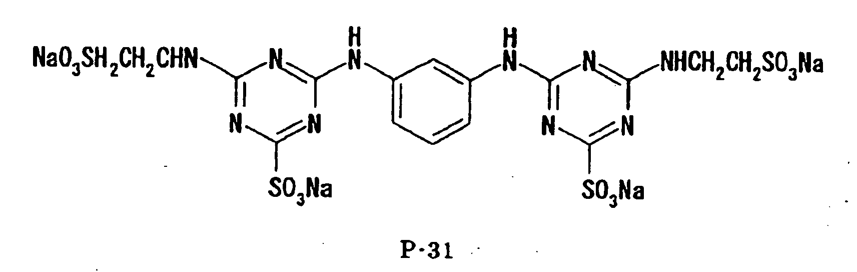

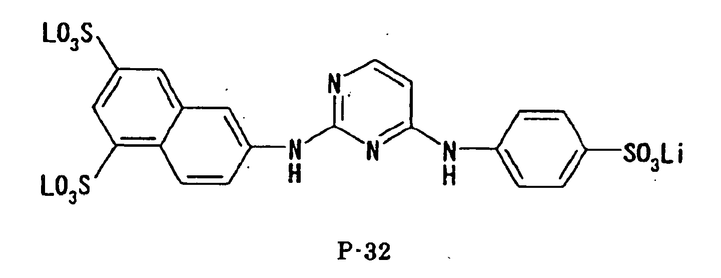

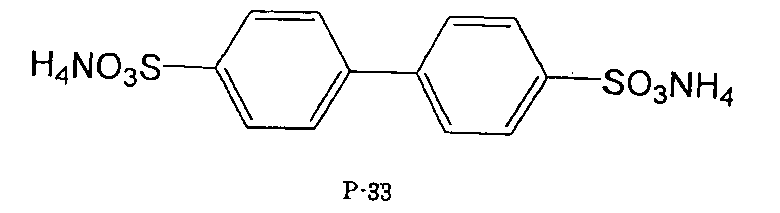

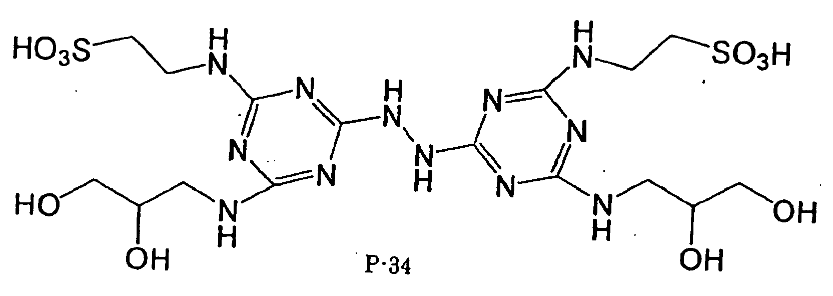

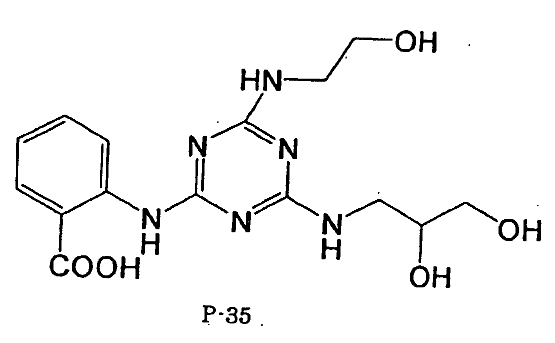

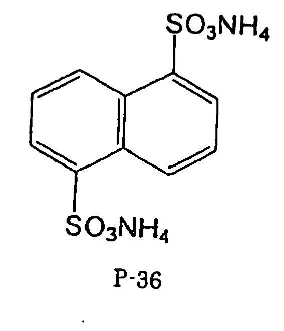

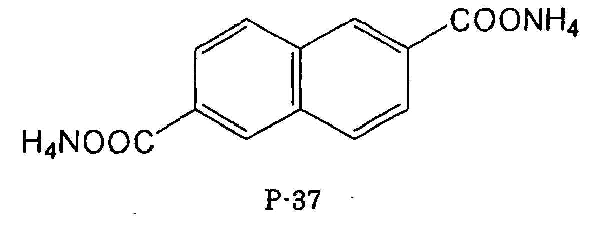

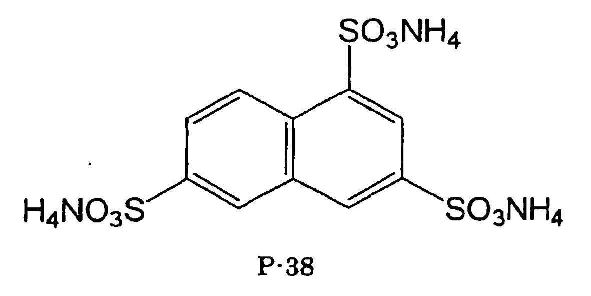

Incidentally, the expression "number of atoms having conjugate π electrons on a per-molecule basis" as used in the invention refers to the number of atoms sharing, regardless of sharing degree, a group of π electrons constituting a conjugated-bond structure capable of assuming an arbitrary conjugated system. Therefore, the number of conjugate electrons corresponds with the number of the atoms defined above. More specifically, taking Compounds P-1 to P-38 illustrated above as examples, the number of atoms having conjugate π electrons on a per-molecule basis is a value as shown in Table 1-1.

**Table 1-1**

| Number of atoms having conjugate π electrons with respect to compounds P-1 to P-38 | |
|---|---|
| Compound | Number of atoms having conjugate π electrons |
| P-1 | 18 |
| P-2 | 18 |
| P-3 | 18 |
| P-4 | 18 |
| P-5 | 18 |
| P-6 | 18 |
| P-7 | 18 |
| P-8 | 18 |
| P-9 | 18 |
| P-10 | 18 |
| P-11 | 18 |
| P-12 | 18 |
| P-13 | 18 |
| P-14 | 18 |
| P-15 | 18 |
| P-16 | 18 |
| P-17 | 22 |
| P-18 | 22 |
| P-19 | 18 |
| P-20 | 30 |
| P-21 | 30 |
| P-22 | 42 |
| P-23 | 18 |
| P-24 | 18 |
| P-25 | 18 |
| P-26 | 26 |
| P-27 | 32 |
| P-28 | 26 |
| P-29 | 16 |
| P-30 | 16 |
| P-31 | 18 |
| P-32 | 22 |
| P-33 | 12 |
| P-34 | 12 |
| P-35 | 12 |
| P-36 | 10. |
| P-37 | 10 |
| P-38 | 10 |

In the present recording medium, it is appropriate that the compounds having conjugate π electrons be used in a content of 0.01 to 20 mass %, preferably 0.1 to 10 mass %, based on the total solids in an ink-receiving layer. Additionally, the conjugated π-electron compounds may be used independently, or two or more of them may be used in combination.

The compounds used to advantage in the invention can be easily synthesized by reference to the above-cited documents including JP-A-2002-139822.

### (Water-soluble resins)

In a preferred mode of an ink-jet recording material according to the invention, the ink-receiving layer contains a water-soluble resin in conjunction with a conjugated π-electron compound.

Examples of such a water-soluble resin include resins having hydroxyl groups as hydrophilic structural units, such as polyvinyl alcohol resins [e.g., polyvinyl alcohol (PVA), acetoacetyl-modified polyvinyl alcohol, cation-modified polyvinyl alcohol, anion-modified polyvinyl alcohol, silanol-modified polyvinyl alcohol, polyvinyl acetal], cellulose resins [e.g., methyl cellulose (MC), ethyl cellulose (EC), hydroxyethyl cellulose (HEC), carboxymethyl cellulose (CMC), hydroxypropyl cellulose (HPC), hydroxyethylmethyl cellulose, hydroxypropylmethyl cellulose], chitins, chitosans and starch; resins having ether linkages [e.g., polyethylene oxide (PEO), polypropylene oxide (PPO), polyethylene glycol (PEG), polyvinyl ether (PVE)]; and resins having carbamoyl groups [e.g., polyacrylamide (PAAM), polyvinyl pyrrolidone (PVP), polyacrylic acid hydrazide].

In addition, resins containing carboxyl groups as dissociative groups, such as polyacrylic acid salts, maleic acid resins, alginic acid salts and gelatin, are also included in water-soluble resins usable in the invention.

Of those resins, at least one resin selected from polyvinyl alcohol resins, cellulose resins, resins having ether linkages, resins having carbamoyl groups, resins having carboxyl groups or gelatins, especially polyvinyl alcohol (PVA) resins, is suitable as the water-soluble resin used in the invention.

Examples of polyvinyl alcohol resins used to advantage in the invention include the resins described in JP-B-4-52786, JP-B-5-67432, JP-B-7-29479, Japanese Patent No. 2537827, JP-B-7-57553, Japanese Patent Nos. 2502998 and 3053231, JP-A-63-176173, Japanese Patent No. 2604367, JP-A-7-276787, JP-A-9-207425, JP-A-11-58941, JP-A-2000-135858, JP-A-2001-205924, JP-A-2001-287444, JP-A-62-278080, JP-A-9-39373, Japanese Patent No. 2750433, JP-A-2000-158801, JP-A-2001-213045, JP-A-2001-328345, JP-A-8-324105, JP-A-11-348417, JP-A-58-181687, JP-A-10-259213, JP-A-2001-72711, JP-A-2002-103805, JP-A-2000-63427, JP-A-2002-308928, JP-A-2001-205919 and JP-A-2002-264489.

Examples of water-soluble resins other than polyvinyl alcohol resins include the compounds described in JP-A-11-165461, paragraphs [0011] to [0012], the compounds described in JP-A-2001-205919, and the compounds described in JP-A-2002-264489.

These water-soluble resins may be used independently, or two or more of them may be used in combination. The suitable water-soluble resin content in the present recording medium is from 9 to 40 mass %, preferably from 12 to 33 mass %, based on the total solids of an ink-receiving layer.

### (Fine particles)

In a preferred mode of ink-jet recording material according to the invention, the ink-receiving layer contains fine particles, especially a combination of fine particles with the water-soluble resin as recited above, in conjunction with a compound containing at least two different kinds of di- or higher-valent metals as described hereinafter.

The ink-receiving layer can have a porous structure by containing fine particles, and thereby its ink absorbency is improved. Special cases where the solid content of the fine particles in the ink-receiving layer is greater than 50 mass %, preferably 60 mass %, are advantageous because they enable formation of more satisfactory porous structures and production of ink-jet recording materials having sufficient ink absorbency. The expression "solid content of fine particles in the ink-receiving layer" as used herein refers to the content calculated on a basis of ingredients other than water in a composition forming the ink-receiving layer.

The fine particles used in the invention may be any of organic and inorganic ones, but it is preferable for the present medium to contain inorganic fine particles from the viewpoints of ink absorbency and image stability.

Suitable examples of organic fine particles include particulate polymers prepared by emulsion polymerization, microemulsion polymerization, soap-free polymerization, seed polymerization, dispersion polymerization or suspension polymerization, such as powdery, latex-state or emulsion-state particulate polyethylene, polypropylene, polystyrene, polyacrylate, polyamide, silicone resin, phenol resin and naturally-occurring polymers.

The suitable average size of organic fine particles is 10 µm or below, preferably from 0.2 to 5 µm.

Examples of inorganic fine particles include particulate silica, colloidal silica, titanium dioxide, barium sulfate, calcium silicate, zeolite, kaolinite, halloysite, mica, talc, calcium carbonate, magnesium carbonate, calcium sulfate, pseudoboehmite, zinc oxide, zinc hydroxide, alumina, aluminum silicate, magnesium silicate, zirconium oxide, zirconium hydroxide, cerium oxide, lanthanum oxide and yttrium oxide. Of these inorganic fine particles, particulate silica, colloidal silica, particulate alumina and pseudoboehmite are preferred over the others from the viewpoint of forming satisfactory porous structures. These fine particles may be used as they are primary particles, or in a state that they form into secondary particles. The suitable average primary-particle size of those fine particles is 2 µm or below, preferably 200 nm or below.

More specifically, particulate silica having an average primary-particle size of 30 nm or below, colloidal silica having an average primary-particle size of 30 nm or below, particulate alumina having an average primary-particle size of 20 nm or below and pseudoboehmite having an average pore diameter of 2 to 15 nm are preferable by far. And particulate silica, particulate alumina and pseudoboehmite in particular are used to advantage.

The particulate silica is broadly classified as wet-process particles or dry-process (vapor-phase process) particles according to the method used for preparation thereof. The mainstream of the wet process is a method of preparing hydrated silica by producing activated silica through acidolysis of silicates and then by moderately polymerizing the activated silica to cause aggregation and deposition. On the other hand, the mainstream of the vapor-phase process is a method of preparing anhydrous silica by hydrolyzing silicon halide in a high-temperature vapor phase (flame hydrolysis method), or by heating silica sand and coke with arc in an electric furnace to cause reduction and vaporization and then oxidizing the reduced vapor with air (arc method). The term "vapor-phase process silica" as used herein refers to the fine particles of anhydrous silica prepared by the vapor-phase process. And the vapor-phase process silica in particular is suitable as particulate silica used in the invention.

The vapor-phase process silica differs from the hydrated silica in density of silanol groups at the surface and whether holes are present therein or not, and shows properties different from those of the hydrated silica. Thus the vapor-phase process silica is suitable for formation of a three-dimensional structure with a high porosity. Although reasons for such suitability are not clear, it can be assumed that the hydrated silica has a high silanol-group density of from 5 to 8 per nm² at the fine-particle surface and tends to agglutinate densely (to form aggregates), but on the other hand, the vapor-phase process silica has a low silanol-group density of from 2 to 3 per nm² at the fine-particle surface, and forms loose and soft agglutinates (flocculates) to result in formation of a high-porosity structure.

The vapor-phase process silica has an especially great specific surface area, so it has high ink absorbency and high ink-holding efficiency. In addition, since it has a low refractive index, the vapor-phase process silica has an advantage that it can impart transparency to the receiving layer as far as it is dispersed to an appropriate particle size and can deliver high color density and satisfactory color generation. The transparency of the receiving layer is of importance to not only the use requiring transparency, such as OHP use, but also obtaining high color density and good color-generation-induced gloss even when the receiving layer is applied to a recording medium, such as glossy photo paper.

The suitable average primary-particle size of the vapor-phase process silica is 30 nm or below, preferably 20 nm or below, far preferably 10 or below, particularly preferably from 3 to 10 nm. The vapor-phase process silica is apt to cause adhesion between particles through hydrogen-bond formation between silanol groups, so it can form a high-porosity structure when it has an average primary-particle size of 30 nm or below, with the result that the ink absorption characteristic can be improved effectively.

In addition, the particulate silica may be used in combination with the other fine particles as recited above When the vapor-phase process silica and other fine particles are used in combination, the suitable content of the vapor-phase process silica in the total fine particles is at least 30 mass %, preferably at least 50 mass %.

As to the inorganic fine particles, particulate alumina, alumina hydrate and a mixture or composite thereof are also used to advantage in the invention. Of these substances, alumina hydrate, especially pseudoboehmite (Al₂O₃ · nH₂O), is preferable because it can absorb ink well and fix it. The alumina hydrate can be used in various forms, but it is preferable to use sol-state boehmite as a raw material because it makes formation of a smooth layer easy.

To mention a pore structure of pseudoboehmite, the suitable average pore radius is from 1 to 30 nm, preferably from 2 to 15 nm, and the suitable pore volume is from 0.3 to 2.0 ml/g, preferably from 0.5 to 1.5 ml/g. Herein, the values of pore radius and pore volume are determined by a nitrogen absorption-and-desorption method. Specifically, these values can be measured with a gas absorption-and-desorption analyzer (e.g., Omnisorp 369, trade name, made by Coulter, Inc.).

As to the particulate alumina, on the other hand, particulate alumina prepared in a vapor-phase process is preferable because of its great specific surface area. The suitable average primary-particle size of vapor-phase process alumina is 30 nm or below, preferably 20 nm or below.

The fine particles as mentioned above can be used in an ink-jet recording material, if desired, in the modes disclosed in JP-A-10-81064, JP-A-10-119423, JP-A-10-157277, JP-A-10-217601, JP-A-11-348409, JP-A-2001-138621, JP-A-2000-43401, JP-A-2000-211235, JP-A-2000-309157, JP-A-2001-96897, JP-A-2001-138627, JP-A-11-91242, JP-A-8-2087, JP-A-8-2090, JP-A-8-2091, JP-A-8-2093, JP-A-8-174992, JP-A-11-192777 and JP-A-2001-301314.

The water-soluble resin and the fine particles as main constituents of the ink-receiving layer according to the invention may be single materials, or they each may be used in the form of a mixture of two or more materials.

Further, what kind of a water-soluble resin is used in combination with fine particles, especially particulate silica, becomes important from the viewpoint of keeping transparency. When the vapor-phase process silica is used, polyvinyl alcohol resins are suitable as the water-soluble resin. Of these resins, polyvinyl alcohol resins whose saponification degrees are in the range of 70 to 100%, particularly in the range of 80 to 99.5 %, are preferred over the others.

The polyvinyl alcohol resins have hydroxyl groups in their structural units, and these hydroxyl groups form hydrogen bonds to silanol groups present on the particulate silica surface. Therefore, the polyvinyl alcohol resins tend to form three-dimensional reticular structures having secondary particles of particulate silica as reticulate chain units. Formation of such a three dimensional reticular structure is thought to result in formation of an ink-receiving layer having a porous structure high in porosity and sufficient in strength.

When ink-jet recording is carried out, the porous ink-receiving layer formed in the foregoing manner can quickly absorbs ink by capillary action, and form dots having good roundness without causing ink breed.

Additionally, the polyvinyl alcohol resins may be used in combination with other water-soluble resins as recited above. When the water-soluble resins and the polyvinyl alcohol resins are used in combination, the content of the polyvinyl alcohol resins in the total water-soluble resins used is preferably at least 50% by mass, and far preferably at least 70% by mass.

### (Content ratio of fine particles to water-soluble resins)

The content ratio of fine particles (x) to water-soluble resins (y) [abbreviated as PB ratio (x:y)] in terms of mass has also a significant influence upon the film structure and film strength of the ink-receiving layer. Specifically, as the content ratio [PB ratio] in terms of mass is increased, the ink-receiving layer has a tendency to decrease in density and strength though it increases in porosity, pore volume and surface area (per unit mass).

In the ink-receiving layer according to the invention, it is appropriate that the content ratio [PB ratio (x:y)] in terms of mass be in the range of 1.5:1 to 10:1 1 from the viewpoint of preventing a drop in film strength and cracking upon drying, which are caused by too great a PB ratio, as well as the viewpoint of preventing reduction in ink absorbency which occurs as a result that too small a PB ratio makes it easy for the resin to stop up pores and thereby lowers the porosity.

Since it happens that stress is applied to a recording medium when the medium is passing through the feed system of an ink-jet printer, the ink-receiving layer is required to have sufficient film strength. The attainment of sufficient film strength is also required from the viewpoint of preventing the ink-receiving layer from producing cracks and coming off when the recording medium receives cutwork into sheets. In view of these cases, it is preferable that the mass ratio (x:y) is 5:1 or below. On the other hand, the mass ratio is preferably 2:1 or above from the viewpoint of ensuring high-speed ink absorption when the recording medium is used in an ink-jet printer.

For instance, when a coating solution is prepared by thoroughly dispersing vapor-phase particulate silica having an average primary particle size of 20 nm or below and a water-soluble resin into an aqueous solution at a mass ratio (x:y) of 2:1 to 5:1, coated on a support and then dried, a three-dimensional reticular structure having secondary particles of particulate silica as reticule chains can be formed, and thereby a transparent porous film having an average pore diameter of 30 nm or below, a porosity of 50 to 80%, a specific pore volume of 0.5 ml/g or above and a specific surface area of 100 m²/g or above can be formed with ease.

### (Cross-linking agent)

The ink-receiving layer of an ink-jet recording material according to the invention is preferably in a mode that the coating layer containing the foregoing water-soluble resin, especially in combination with the foregoing fine particles, further contains a cross-linking agent capable of forming cross-links between molecules of the water-soluble resin and is cured by undergoing cross-linking reaction between the cross-linking agent and the water-soluble resin to be rendered more porous.

For cross-linking the water-soluble resins, notably polyvinyl alcohol, boron compounds are suitable. Examples of a boron compound usable for such a purpose include borax, boric acid and borates (e.g., orthoborates, InBO₃, ScBO₃, YBO₃, LaBO₃, Mg₃(BO₃)₂, Co₃(BO₃)₂, diborates (such as Mg₂B₂O₅ and Co₂B₂O₅), metaborates (such as LiB₂, Ca(BO₂)₂, NaBO₂ and KBO₂), tetraborates (such as Na₂B₄O₇·7H₂O), pentaborates (such as KB₅O₈·4H₂O, Ca₂B₆O₁₁·7H₂O and CsB₅O₅)). Of these compounds, borax, boric acid and borates, especially boric acid, are advantageous in that they can quickly cause cross-linking reaction.

The following compounds besides the boron compounds can be used as cross-linking agents for the water-soluble resins as recited above.

Specifically, the compounds usable as the cross-linking agents are aldehyde compounds, such as formaldehyde, glyoxal and glutaraldehyde; ketone compounds, such as diacetyl and cyclopentanedione; active halogen compounds, such as bis(2-chloroethylurea)-2-hydroxy-4,6-dichloro-1,3,5-triazine and sodium salt of 2,4-dichloro-6-s-triazine; active vinyl compounds, such as divinylsulfonic acid, 1 ,3-vinylsulfonyl-2-propanol, N,N'-ethylenebis(vinylsulfonylacetamide) and 1,3,5-triacryloyl-hexahydro-s-trizaine; N-methylol compounds, such as dimethylolurea and methyloldimethylhydantoin; melamine resins, such as methylolmelamine and alkylated methylolmelamine; epoxy resins; isocyanate compounds, such as 1,6-hexamethylenediidocyanate; the aziridine compounds described in U.S. Patent Nos. 3,017,280 and 2,983,611; the carboxyimide compounds described in U.S. Patent No. 3,100,704; epoxy compounds, such as glycerol triglycidyl ether; ethyleneimino compounds, such as 1,6-hexamethylene-N,N'-bisethyleneurea; halogenated carboxyaldehyde compounds, such as mucochloric acid and mucophenoxychloric acid; dioxane compounds, such as 2,3-dihydroxydioxane; metal-containing compounds, such as titanium lactate, aluminum sulfate, chrome alum, potassium alum, zirconium acetate and chromium acetate; polyamine compounds, such as tetraethylenepentamine; hydrazide compounds, such as adipic dihydrazide; and low-molecular weight compounds or polymers containing at least two oxazoline groups per molecule.

The cross-linking agents as recited above can be used alone or as combination of two or more thereof.

The curing by formation of cross-links is preferably carried out by adding a cross-linking agent to a coating solution containing a particulate substance and a water-soluble resin (hereinafter referred to as "coating Solution A", too) and/or a basic solution as mentioned hereinafter, and further by applying a basic solution of pH 7.1 or higher (coating Solution B) to the coating layer (1) simultaneously with formation of the coating layer by applying the coating solution or (2) during drying of the coating layer formed by applying the coating solution and before the coating layer shows drying shrinkage. The pH of the basic solution used herein is preferably 7.5 or higher, especially 8 or higher.

The addition of a cross-linking agent, when a boron compound is taken as an example of the cross-linking agent, is preferably carried out in the following manner Specifically, when the ink-receiving layer is a layer prepared by applying a coating solution containing a particulate substance, polyvinyl alcohol and a water-soluble resin (coating Solution A) to form a coating layer and curing the coating layer by formation of cross-links, the curing by formation of cross-links is carried out by applying a basic solution of pH 7.1 or higher (coating Solution B) to the coating layer (1) simultaneously with the formation of the coating layer by application of the coating solution, or (2) during the drying of the coating layer formed by application of the coating solution and before the coating layer shows drying shrinkage. Herein, it will suffice to incorporate a boron compound as the cross-linking agent in either coating Solution A or coating Solution B, but the boron compound may be incorporated in both coating Solution A and coating Solution B.

The cross-linking agent is used in an amount of 1 to 50 % by mass, preferably 5 to 40 % by mass, relative to the water-soluble-resin.

### (Mordant)

In the invention, the ink-receiving layer may contain an organic mordant in combination with an inorganic mordant for the purpose of achieving improvements in water resistance and age smearing resistance of formed images.

As the organic mordant, a cationic polymer (a cationic mordant) is suitable. By allowing the mordant to be present in an ink-receiving layer, the mordant interacts with liquid ink containing an anionic dye as a coloring material to stabilize the coloring material and to improve water resistance and age smearing resistance. In using the organic mordant and the inorganic mordant, each may be a combination of two or more varieties.

For incorporation of the mordant into the ink-receiving layer can be used a method of adding the mordant to the coating Solution A containing a particulate substance and a water-soluble resin can be used, or a method of adding the mordant to the coating Solution B when there is apprehension that the mordant flocculates a particulate substance.

As the cationic mordant, a polymeric mordant containing as cationic groups primary to tertiary amino groups or quaternary ammonium salt groups is suitably used, but a cationic nonpolymeric mordant can also be used.

Suitable examples of the polymeric mordant include homopolymers of monomers having primary to tertiary amino groups or salts thereof, or quaternary ammonium salt groups (mordant monomers), and copolymers or condensation polymers of such mordant monomers and other monomers (nonmordant monomers). Such polymeric mordant can be used in the form of a water-soluble polymer or in the form of water-dispersible latex particles.

Examples of the monomers (mordant monomers) include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, n,n-dimethyl-N-(4-methyl)benzyl-N-p-vinylbenzylammonium chloride, N,N-dimethyl-N-phenyl-N-p-vinylbenzylammonium chloride, trimethyl-p-vinylbenzylammonium bromide, trimethyl-m-vinylbenzylarmnonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-ethyl-N-2-(4-vinylphenyl)ethylammonium chloride, N,N-diethyl-N-methyl-N-2-(4-vinylphenyl)ethylammonium acetate, and quaternary compounds formed by reacting methyl chloride, ethyl chloride, methyl bromide, ethyl bromide, methyl iodide or ethyl iodide with N,N-dimethylaminoethyl(meth)acrylate, N,N-diethylaminoethyl(meth)acrylate, N,N-dimethylaminopropyl(meth)acrylate, N,N-diethylaminopropyl(meth)acrylate, N,N-diethylaminoethyl(meth)acrylamide, N,N-diethylaminoethyl(meth)acrylamide, N,N-dimethylaminopropyl(meth)acrylamide and N,N-diethylaminopropyl(meth)acrylamide, or the sulfonates, alkylsulfonates, acetates or alkylcarboxylates obtained by anion replacement in the quaternary compounds recited above.

Examples of those quaternary compounds include monomethyldiallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, triethyl-3-(acryloylamino)propylammonium bromide, trimethyl-2-(methacryloyloxy)ethylammonium sulfonate, and trimethyl-3-(acryloylamino)propylammonium acetate.

Examples of other copolymerizable monomers include N-vinylimidazole and N-vipyl-2-methylimidazole.

In addition to those monomers, allylamine, diallylamine and their derivatives and salts can also be used. Examples of such compounds include allylamine, allylamine hydrochloride, allylamine acetate, allylamine sulfate, diallylamine, diallylamine hydrochloride, diallylamine acetate, diallylamine sulfate, diallylmethylamine and salts thereof (e.g., hydrochloride, acetate, sulfate), diallylethylamine and salts thereof (e.g., hydrochloride, acetate, sulfate) and diallyldimethylammonium salts (whose counter anions include chloride, acetate and sulfate ions) Incidentally, these allylamine and diallylamine derivatives are inferior in polymerization activity when they take amine forms, so they are generally polymerized in salt forms and desalted as required.

In addition, compounds obtained by carrying out polymerization using units such as N-vinylacetamide and N-vinylformamide, and then converting the units to vinylamine units by hydrolysis and further to their salts may also be utilized.

The term "nonmordant monomers" refers to the monomers containing neither basic groups, such as primary to tertiary amino groups, their salts and quaternary ammonium salt groups, nor cationic moieties and having no interaction with dyes in ink-jet ink or little interaction with such dyes, if any.

Examples of nonmordant monomers include alkyl esters of (meth)acrylic acid; cycloalkyl esters of (meth)acrylic acid, such as cyclohexyl (meth)acrylate; aryl esters of (meth)acrylic acid, such as phenyl (meth)acrylate; aralkyl esters of (meth)acrylic acid, such as benzyl (meth)acrylate; aromatic vinyl compounds, such as styrene, vinyltoluene and α-methylstyrene ; vinyl esters, such as vinyl acetate, vinyl propionate, vinyl ester of versatic acid; allyl esters, such as allyl acetate; halogen-containing monomers, such as vinyl chloride; vinyl cyanides, such as (meth)acrylonitrile; and olefins, such as ethylene and propylene.

As the alkyl esters of (meth)acrylic acid, those containing 1 to 18 carbon atoms in each individual alkyl moiety are suitable. Examples of such alkyl esters include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate and stearyl (meth)acrylate.

Of these esters, methyl acrylate, ethyl acrylate, methyl methacrylate, ethyl methacrylate and hyddroxyethylmethacrylate are preferred over the others.

The nonmordant monomers as recited above can be used alone or as combinations of two or more thereof

Examples of suitable polymeric mordants other than those recited above include polydiallyldimethylammonium chloride, copolymers of diallyldimethylammonium chloride and other monomers (including mordant monomers and nonmordant monomers), copolymer of diallyldimethylammonium chloride and SO₂, polydiallylmethylamine hydrochloride, and cyclic amine resins, typified by polydiallyl hydrochloride, and their derivatives (including copolymers); alkyl(meth)acrylate polymers substituted with secondary amino, tertiary amino or quaternary ammonium salts, typified by polydiethylmethacryloyloxyethylamine, polytrimethylmethacryloyloxyethylammonium chloride, polydimethylbenzylmethacryloyloxyethylammonium chloride and polydirnethylhydroxyethylacryloyloxyethylammonium chloride, and copolymers of such substituted alkyl(meth)acrylates and other monomers; polyamine resins, typified by polyethyleneimine and derivatives thereof, polyallylamine and derivatives thereof, and polyvinylamine and derivatives thereof; polyamine resins, typified by polyamide-polyamine resins and polyamide-epichlorohydrin resins; polysaccharides, typified by cationic starch, chitosan and derivatives thereof, dicyandiamide derivatives, typified by dicyandiamide-formaldehyde polycondensates and dicyhandiamide-ethylenetriamine polycondensates polyamidine and derivatives thereof; dialkylamine-epichlorohydrin addition polymers, typified by dimethylamine-epichlorohydrin addition polymer, and derivatives thereof; and styrene polymers having quaternary ammonium salt-substituted alkyl groups and copolymers of such substituted styrene monomers and other monomers.

More specifically, the polymeric mordants as recited above include those described in JP-A-48-28325, JP-A-54-74430, JP-A-54-124726, JP-A-55-22766, JP-A-55-142339, JP-A-60-23850, JP-A-60-23851, JP-A-60-23852, JP-A-60-23853, JP-A-60-57836, JP-A-60-60543, JP-A-60-118834, JP-A-60-122940, JP-A-60-122941, JP-A-60-122942, JP-A-60-235134, JP-A-1-161236, U.S. Patent Nos. 2,484,430, 2,548,564, 3,18,061, 3,309,690, 4,115,124, 4,124,386, 4,193,800, 4,273,853, 4,282,305 and 4,450,224, JP-A-1-161236, JP-A-10-81064, JP-A-10-157277, JP-A-10-217601, JP-A-2001-13 8621, JP-A-2000-211235, JP-A-2001-138627, JP-A-8-174992, JP-B-5-35162, JP-B-5-35163, JP-B-5-35164, JP-B-5-88846, and Japanese Patent Nos. 2,648,847 and 2,661,677.

When an inorganic mordant and an organic mordant are used in combination, the relative proportion of these mordants may be determined by the balance between keeping quality and ink bleed. Herein, the suitable proportion of the inorganic mordant in the total mortands used is 5% or more, preferably 10% or more. The suitable amount of total mordants used is from 0.01 g/m² to 5 g/m², preferably from 0.1 g/m² to 3 g/m².

### (Compound containing two or more kinds of di- or higher-valent metal atoms)

In the invention, compounds having at least two species of di- or higher-valent metal atoms on a per-molecule basis (hereinafter referred simply to as "metal-containing compounds") may be used. The species of di- or higher-valent metal atoms include all species of metal atoms exhibiting electrovalence of two or above, and they are not limited to any particular species. Examples of such metal species include magnesium, aluminum, calcium, scandium, titanium, vanadium, manganese, iron, nickel, chromium, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten and bismuth.

As the species of di- or higher-valent metal atoms, combinations of at least two metallic elements selected from the group II metals, the group III metals or the group IV metals are preferred.

Suitable examples of the group II metallic elements include beryllium, magnesium, calcium, strontium, barium and zinc.

Suitable examples of the group III metallic elements include scandium, yttrium, lanthanum, boron, aluminum, gallium, indium and thallium.

Suitable examples of the group IV metallic elements include titanium, zirconium, hafnium and thorium.

Of those metallic elements, at least two species of metals selected from aluminum, zirconium, titanium, lanthanides, zinc or magnesium are more suitable as the species of di- or higher-valent metal atoms contained in the metal-containing compounds used in the invention from the viewpoint of improvements in ozone resistance and age smearing resistance. And the combinations of zirconium and at least one species of metal atom selected from aluminum, titanium, lanthanides, zinc or magnesium are especially preferred.

Further, it is preferable from the viewpoint of enhancement of manufacturing suitability that the compounds containing at least two species of di- or higher-valent metal atoms on a per molecule basis are water-soluble metal-containing compounds. The standard of the expression "water-soluble" as used herein lies in water solubility of 0.5 mass % or higher, preferably 1.0 mass % or higher, far preferably 1.5 mass %, at room temperature. On the other hand, the metal-containing compounds can be added in the form of emulsified dispersions or organic solutions when they are soluble in oil; while, when they are solid compounds, they can be added as fine-grain dispersions.

For achieving a higher-level improvement in both ozone resistance and age smearing resistance, it is appropriate that the metal-containing compound as used in the invention be a complex compound formed from at least both of a zirconium-containing compound and an aluminum-containing compound.

Examples of a zirconium-containing compound usable for the above purpose include zirconium acetylacetonate, zirconium acetate, zirconium sulfate, zirconium ammonium carbonate, zirconium stearate, zirconium octylate, zirconium sulfate, zirconium nitrate, zirconium oxychloride, zirconium hydroxychloride, zirconium lactate, zirconium succinate, zirconium oxalate, basic zirconium aminoacetate, and mixtures of any two or more of the zirconium salts recited above.

Examples of an aluminum-containing compound usable for the foregoing purpose include aluminum halide, basic aluminum chloride (aluminum polychloride), basic aluminum sulfate, basic aluminum nitrate, basic aluminum sulfaminate, basic aluminum phenolsulfonate, and mixtures of any two or more of the aluminum salts recited above.

Of the complex compounds containing both zirconium and aluminum, the complex compounds formed using at least basic zirconium compounds and/or basic aluminum compounds are most suitable as the metal-containing compounds.

As the basic zirconium compounds usable for forming the metal-containing compounds, compounds represented by the following formula (I) are suitable:

Zr(OH)ₓA₄₋ₓ (I)

wherein A represents an amino acid and x represent a number satisfying the inequality 0<x<4 (wherein the number doesn't need to be an integer).

Of the basic zirconium compounds represented by formula (I), basic zirconium-amino acid gel, zirconium hydroxide-amino acid gel, basic zirconium carbonate-amino acid gel and mixtures of two or more of these gels are preferred over the others. These gels are preferably reaction products of water-soluble salts of amino acids and water-soluble zirconium salts, or reaction products of water-soluble salts of amino acids and zirconium hydroxysalts.

In addition, zirconium oxysalts, zirconium hydroxysalts, trioxodizirconyl hydroxysalts and mixtures of these salts are suitable as the zirconium compounds.

When the basic zirconium compounds are basic zirconium carbonate gels, the basic zirconium carbonates are preferably compounds represented by the following formula (II)

Zr(OH)₄₋₂ₓ(CO₃)ₓ (II)

wherein x represents a number satisfying the inequality 0<x<2 (wherein the number doesn't need to be an integer).

Of the basic zirconium carbonate gels, the reaction products of sodium carbonate and zirconium oxysalts or zirconium hydroxysalts are preferred.

The foregoing formulae (I) and (II) are simplified formulae, so the compounds represented by them may also be in a polymeric state and ligands and/or water can be bonded thereto. Alternatively, the OH groups in formulae (I) and (II) can be represented as oxide (oxy group).

Acid zirconium compounds, that is, cationic zirconium compounds usable for formation of the metal-containing compounds include both zirconium oxysalts and zirconium hydroxysalts (also referred to as zirconium salts and zirconyl hydroxysalts). These compounds can be represented by the following formula (III):

ZrO(OH)_{2-nz}B_{z} (III)

wherein z is in the range of about 0.9 to about 2 (where z doesn't need to be an integer), n is a valence number ofB and satisfies the inequality 2-nz>0, and B is selected from the group consisting of halide, nitrate, sulfamate, sulfate and mixtures of two or more thereof.

The basic aluminum compounds usable for formation of the metal-containing compounds can be represented by the following formula (IV):

Al₂(OH)₆₋ₙₓBₓ (IV)

wherein B is selected from the group consisting of halide, nitrate, sulfamate, sulfate and mixtures of two or more thereof, x is a number satisfying the inequality 0<x<6 (where x doesn't need to be an integer), (6-nx) represents a number of zero or above, and n represents a valence number of B.

More specifically, the above formula (IV) represents polymers, complexes, basic aluminum compounds having aquo ligands and/or bonded molecules, and mixtures of these compounds.

Of the basic aluminum compounds represented by formula (IV), basic aluminum chlorides of formulae Al₂(OH)₂Cl₄ to Al₂(OH)₅Cl, which correspond to the formula (IV) in which B is chloride and x satisfies the inequality 2<x<5 (where x doesn't need to be an integer), are preferred over the others.

In the complex compound containing both zirconium and aluminum, the suitable mole ratio of zirconium to aluminum is from 1/100 to 100/1, preferably from 3/100 to 100/3, particularly preferably from 5/100 to 100/5.

One preferred form of the compounds containing at least two species of di- or higher-valent metal atoms on a per-molecule basis is a complex using an organic compound in addition to the species of metal atoms. The organic compound is preferably a compound containing at least one atom having a lone pair of electrons, such as oxygen atom, sulfur atom, nitrogen atom or phosphorus atom, so that it can cause interaction with the species of metal atoms. Examples of such an organic compound include organic compounds at least containing groups convertible into anionic-groups selected from-CO₂⁻, -SO₃⁻, -OSO₃⁻, -PO₄^{m-}(m=1,2 or 3), -PO₃²⁻ , -PO₂⁻ or - O⁻ The organic compounds having groups convertible into those anionic groups may further have nitrogen atoms.

Examples of such organic compounds include amino acids, aliphatic carboxylic acid compounds, betaine compounds (such as carbobetaine, sulfobetaine and phosphobetaine compounds), aromatic carboxylic acid compounds, heterocyclic carboxylic acid compounds, aliphatic diketone compounds, aliphatic sulfonic acid compounds, aromatic sulfonic acid compounds, heterocyclic sulfonic acid compounds, aliphatic phosphoric acid compounds, aromatic phosphoric acid compounds, heterocyclic phosphoric acid compounds, aliphatic sulfinic acid compounds, aromatic sulfinic acid compounds, heterocyclic sulfinic acid compounds, amine compounds (such as hydroxyl group-containing amine compounds), amide compounds and urea compounds.

These compounds may be low-molecular-weight compounds or high-molecular-weight compounds having substituent group on partial skeletons.

The compounds containing at least two species of di- or higher-valent metal atoms on a per-molecule basis are listed below, but these compounds listed should not be construed as limiting the scope of the invention. The list thereof include:
(1) zirconium-chloroglycine-hydroxyaluminum complex,
(2) octaaluminum-zirconium-pentachloride-tricosahydroxide,
(3) tetraaluminum-zirconium-tetrachloride-dodecahydroxide,
(4) tetraaluminum-zirconium-trichloride-tridecalrydroxide,
(5) octaaluminum-zirconium-octachloride-eicosahydroxide,
(6) a mixture of basic aluminum chloride (Al₂(OH)₅Cl) and zirconium lactate,
(7) a complex of basic aluminum chloride (Al₂(OH)₅Cl) and zirconium acetate,
(8) a complex of basic aluminum chloride (Al₂(OH)₅Cl) and basic zirconium aminoacetate,
(9) a complex of aluminum chloride, basic zirconium α-aminopropionate and zinc sulfate,
(10) a complex of basic zirconium aminoacetate, lanthanum chloride and basic aluminum chloride (Al₂(OH)₅Cl),
(11) a complex of basic aluminum chloride (Al₂(OH)₅Cl), zirconium oxychloride and hydroxyethyliminodiacetic acid,
(12) a complex of basic aluminum chloride (Al₂(OH)₅Cl), zirconium oxychloride and betaine,
(13) myristato-methacrylato-chlorohydroxo-metanolato-isopropanolato-zirconium-aluminium, and
(14) 3-aminopropionato-chlorohydroxo-methanolato-zirconium-aluminum.

In producing an ink-jet recording material according to the invention, the aforementioned compounds in which at least two species of di- or higher-valent metal atoms are contained on a per-molecule basis may be used in either of the following ways: (1) a compound containing at least two species of di- or higher-valent metal atoms per molecule is prepared in advance and used in a condition that the metal-containing compound is added to a coating solution for forming an ink-receiving layer, or (2) individual metal-containing compounds capable of forming a compound (complex) containing at least two species of di- or higher-valent metal atoms per molecule as intended in the invention (e.g:, a combination of a zirconium-containing compound and an aluminum-containing compound) are added together or separately to a coating solution for forming an ink-receiving layer and/or a solution for applying a mordant at the solution-preparing stage and allowed to react with each other during the process of preparing those solutions, and the reaction product thus formed is used as it is.

Additionally, each of the compounds containing at least two species of di- or higher-valent metal atoms on a per-molecule basis can be prepared generally by mixing individual metal-containing compounds capable of forming an intended metal-containing compound, or further heating them, if needed. The compounds containing individual metals as used herein may be in salt forms taken by bonding to a strong acid or a weak acid, or may be in forms of hydroxides, halohydroxides or complexes. These complex compounds formed by reacting compounds according to the invention can be incorporated into the ink-receiving layer of an ink-jet recording material. Examples of metal salts, hydroxides, halohydroxides and complexes as mentioned include the following:
calcium acetate, calcium chloride, calcium formate, calcium sulfate, barium acetate, barium sulfate, barium phosphate, manganese chloride, manganese acetate, manganese formate dihydrate, manganese ammonium sulfate hexahydrate, cupric chloride, ammonium copper(II) chloride dihydrate, copper sulfate, cobalt chloride, cobalt thiocyanate, cobalt sulfate, nickel sulfate hexahydrate, nickel chloride hexahydrate, nickel acetate tetrahydrate, nickel ammonium sulfate hexahydrate, nickel amidosulfate tetrahydrate, aluminum sulfate, aluminum alum, aluminum sulfite, aluminum thiosulfate, aluminum polychloride, basic aluminum lactate, basic aluminum sulfate, basic aluminum nitrate, basic aluminum sulfaminate, basic aluminum formate, basic aluminum acetate, basic aluminum aminoacetate, aluminum nitrate nonahydrate, aluminum chloride hexahydrate, ferrous bromide, ferrous chloride, ferric chloride, ferrous sulfate, ferric sulfate, zinc phenolsulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconyl acetate, zirconyl sulfate, zirconium ammonium carbonate, zirconyl stearate, zirconyl octylate, zirconyl nitrate, zirconyl lactate, zirconyl succinate, zirconyl oxalate, zirconium ammonium acetate, zirconium potassium carbonate, zirconium sodium lactate, basic zirconium aminoacetate; zirconium oxychloride, zirconium hydroxychloride, chromium acetate, chromium sulfate, magnesium sulfate, magnesium chloride hexahydrate, magnesium citrate nonahydrate, sodium phosphotungstate, sodium tungsten citrate, dodecatungstophosphoric acid n-hydrate, dodecatungstosilicic acid hexacosahydrate, molybdenum chloride, dodecamolybdophosphoric acid n-hydrate, gallium nitrate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octylate, praseodymium nitrate, neodymium nitrate, samarium nitrate, europium nitrate, gadolinium nitrate, dysprosium nitrate, erbium nitrate, ytterbium nitrate, hafnium chloride and bismuth nitrate.

Of the compounds recited above, aluminum-containing compounds, such as aluminum sulfate, aluminum alum, aluminum-sulfite, aluminum thiosulfate, aluminum polychloride; basic aluminum lactate, basic aluminum sulfate, basic aluminum nitrate, basic aluminum sulfaminate, basic aluminum formate, basic aluminum acetate, basic aluminum aminoacetate, aluminum nitrate nonahydrate and aluminum chloride hexahydrate; titanium-containing compounds, such as titanium tetrachloride, tetraisopropyl titanate, titanium acetylacetonate and titanium lactate; and zirconium-containing compounds, such as zirconium acetylacetonate, zirconyl acetate, zirconyl sulfate, zirconium ammonium carbonate, zirconyl stearate, zirconyl octylate, zirconyl nitrate, zirconyl lactate, zirconyl succinate, zirconyl oxalate, zirconium ammonium acetate, zirconium potassium carbonate, zirconium sodium lactate, basic zirconium aminoacetate, zirconium oxychloride and zirconium hydroxychloride, are preferred over the others. And basic zirconium salts and/or basic aluminum salts in particular are used to advantage.

For the purpose of further improvements in image bleed and light resistance, it is appropriate that the content of the compounds having at least two species of di- or higher-valent metal compounds on a per-molecule basis in the ink-receiving layer according to the invention be from 0.01 g/m² to 20 g/m², preferably from 0.1 g/m² to 15 g/m², particularly preferably from 0.5 g/m² to 10 g/m².

When the content of the complexes is lower than 0.01 g/m², their effect on improvements in image bleed and light resistance is occasionally insufficient; while, when the content is higher than 20 g/m², there sometimes occur flocculation of fine particles used and reduction in glossiness of the recording medium.

### (Other ingredients)

An ink-jet recording material according to the invention can further contain various known additives as required. Examples of such additives include an acid, a ultraviolet absorbent, an antioxidant, a brightening agent, an monomer, a polymerization initiator, a polymerization inhibitor, a bleed preventive, an antiseptic, a viscosity stabilizer, an antifoaming agent, a surfactant, an antistatic agent, a matting agent, a curl preventive and a water resistance-imparting agent.

In the invention, the ink-receiving layer may contain an acid. By adding an acid, the surface pH of the ink-receiving layer is adjusted to pH 3-8, preferably pH 4-6. This adjustment is favorable to enhancing the resistance of white areas to yellow change. The measurement of surface pH is made in accordance with the method A (coating method) of the pH measuring methods defined by Nippon Kami Pulp Gijutsu Kyokai (J. TAPPI). Specifically, the measurement can be carried out using a pH Indicator Set for paper surface, Model MPC, made by KYORITSU CHEMICAL-CHECK Lab., Corp., which conforms to the method A.

Examples of an acid usable for the foregoing purpose include formic acid, acetic acid, glycolic acid, oxalic acid, propionic acid, malonic acid, succinic acid, adipic acid, maleic acid, malic acid, tartaric acid, citric acid, benzoic acid, phthalic acid, isophthalic acid, glutaric acid, gluconic acid, lactic acid, aspartic acid, glutaminic acid, salicylic acid, metal salts of salicylic acid (e.g., Zn, Al, Ca and Mg salts), methanesulfonic acid, itaconic acid, benzenesulfonic acid, toluenesulfonic acid, trifluoromethanesulfonic acid, styrenesulfonic acid, trifluoroacetic acid, barbituric acid, acrylic acid, methacrylic acid, cinnamic acid, 4-hydroxybenzoic acid, aminobenzoic acid, naphthalenedisulfonic acid, hydroxybenzenesulfonic acid, toluenesulfinic acid; benzenesulfinic acid, sulfanilic-acid, sulfaminic acid, α-resorcylic acid, β-resorcylic-acid, γ-resorcylic acid, gallic acid, phloroglucinol, sulfosalicylic acid, ascorbic acid, erysorbic acid, bisphenolic acid, hydrochloric acid, nitric acid, sulfuric acid, phosphoric acid, polyphophoric acid, boric acid, boronic acid, and acidic ones of the organic and inorganic mordants recited above. The addition amounts of these acids may be determined so that the ink-receiving layer has a surface pH of 3 to 8.

The acids recited above may be used in the form of metal salts (e.g., sodium salts, potassium salts, calcium salts, cesium salts, zinc salts, copper salts, iron salts, aluminum salts, zirconium salts, lanthanum salts, yttrium salts, magnesium salts, strontium salts, cerium salts), or salts prepared by reacting the acids with amines (e.g., ammonia, triethylamine, tributyl amine, piperazine, 2-methylpiperazine, polyallylamine).

In the invention, it is preferable that the ink-receiving layer contains keeping quality improvers, including an ultraviolet absorbent, an antioxidant and a bleed preventive.

Examples of compounds usable as the ultraviolet absorbent, the antioxidant and the bleed preventive include alkylphenol compounds (including hindered phenol compounds), alkylthiomethylphenol compounds, hydroquinone compounds, alkylated hydroquinone compounds, tocopherol compounds, thioether linkage-containing aliphatic, aromatic and/or heterocyclic compounds, bisphenol compounds, O-, N- and S-benzil compounds, hydroxybenzil compounds, triazine compounds, phosphonate compounds, acylaminophenol compounds, ester compounds, amide compounds, ascorbic acid, amine antioxidants, 2-(2-hydroxyphenyl)benzotriazole compounds, 2-hydroxybenzophenone compounds, acrylates, water-soluble or hydrophobic metal salts, organometallic compounds, metal complexes, hindered amine compounds (including TEMPO compounds), 2-(2-hydroxyphenyl) 1,3,5-triazine compounds, metal deactivators, phosphite compounds, phosphonite compounds, hydroxyamine compounds, nitron compounds, peroxide scavengers, polyamide stabilizers, polyether compounds, basic auxiliary stabilizers, benzofuranone compounds, indolinone compounds, phosophine compounds, polyaminde compounds, thiourea compounds, urea compounds, hydrazide compounds, amidine compounds, sugar compounds, hydroxybenzoic acid compounds, dihydroxybenzoic acid compounds, and trihydroxybenzoic acid compounds.

Of these compounds, alkylated phenol compounds, thioether linkage-containing aliphatic, aromatic and/or heterocyclic compounds, bisphenol compounds, ascorbic acid, amine antioxidants, water-soluble or hydrophilic metal salts, organometallic compounds, metal complexes, hindered amine compounds, hydroxyamine compounds, polyamine compounds, thiourea compounds, hydrazide compounds, hydroxybenzoic acid compounds, dihydroxybenzoic acid compounds and trihydroxybenzoic acid compounds are preferred over the others.

Examples of those compounds include those described in JP-A-2002-36717, JP-A-2002-86904, Japanese Patent No. 2002-13005, JP-A-10-182621, JP-A-2001-26051, JP-B-4-34953, JP-B-4-34513, JP-A-11-170686, JP-B-4-34512, European Patent No. 1138509, JP-A-60-67190, JP-A-7-276808, JP-A-2001-94829, JP-A-47-10537, JP-A-58111942, JP-A-58-212844, JP-A-59-19945, JP-A-59-46646, JP-A-59-109055, JP-A-63-53544, JP-B-36-10466, JP-B-42-26187, JP-B-48-30492, JP-B-48-31255, JP-B-48-41572, JP-B-48-54965, JP-B-50-10726, U.S. Patent Nos. 2,719,086, 3,707,375, 3,754,919, 4,220,711, JP-B-45-4699, JP-B-54-5324, EP-A-223-739, EP-A-309401, EP-A-309402, EP-A-310551, EP-A-310552, EP-A-459416, German Patent Application (OLS) No. 3,435,443, JP-A-54-48535, JP-A-60-107384, JP-A-60-107383, JP-A-60-125470, JP-A-60-125471, JP-A-60-125472, JP-A-60-287485, JP-A-60-287486, JP-A-60-287487, JP-A-60-287488, JP-A-61-160287, JP-A-61-185483, JP-A-61-211079, JP-A-62-146678, JP-A-62-146680, JP-A-62-146679, JP-A-62-282885, JP-A-62-262047, JP-A-63-051174, JP-A-63-89877, JP-A-63-88380, JP-A-63-88381, JP-A-63-113536, JP-A-63-163351, JP-A-63-203372, JP-A-63-224989, JP-A-63-251282, JP-A-63-267594, JP-A-63-182484, JP-A-1-239282, JP-A-2-262654, JP-A-2-71262, JP-A-3-121449, JP-A-4-291685, JP-A-4-291684, JP-A-5-61166, JP-A-5-119449, JP-A-5-188687, JP-A-5-188686, JP-A-5-110490, JP-A-5-1108437, JP-A-5-170361, JP-B-48-43295, JP-B-48-33212, and U.S. Patent Nos. 4,814,262 and 4,980,275.

The additional ingredients as recited above may be used alone or as combinations of two or more thereof In advance of their addition, the additional ingredients may be made soluble in water, made dispersive, formed into a polymer dispersion, emulsified or formed into oil droplets. Alternatively, they can be encased in microcapsules. In an ink-jet recording material according to the invention, the amount of the additional ingredients added is preferably from 0.01 to 10 g/m².

For the purpose of enhancing the dispersibility of inorganic fine particles, the particle surface may be treated with a silane coupling agent. As the silane coupling agent, compounds having organic functional groups (e.g., a vinyl group, an amino group (including primary to tertiary amino groups and quaternary ammonium salt groups), an epoxy group, a mercapto group, a chloro group, an alkyl group, a phenyl group, an ester group, a thioether group) in addition to moieties for performing coupling treatment are suitable.

In the invention, it is preferable that the coating solution for an ink-receiving layer contains a surfactant. As the surfactant, any of cationic, anionic, nonionic, amphoteric, fluorine-containing and silicon-containing surfactants can be used.

Examples of nonionic surfactants usable herein include polyoxyalkylene alkyl ethers and polyoxyalkylene alkyl phenyl ethers (e.g., diethylene glycol monomethyl ether, diethylene glyocl diethyl ether, polyoxyethylene lauryl ether, polyoxyethylene stearyl ether, polyoxyethylene nonyl phenyl ether), oxyethylene-oxypropylene block copolymer, sorbitan fatty acid esters (e.g., sorbitan monolaurate, sorbitan monooleate, sorbitan trioleate), polyoxyethylene sorbitan fatty acid esters (e.g., polyoxyethylene sorbitan monolaurate, polyoxyethylene sorbitan monooleate, polyoxyethylene sorbitan trioleate), polyoxyethylene sorbitol fatty acid esters (e.g., polyoxyethylene sorbitol tetraoleate), glycerin fatty acid esters (e.g., glycerol monooleate), polyoxyethylene glycerin fatty acid esters (e.g., polyoxyethylene glycerin monostearate, polyoxyethylene glycerin monooleate), polyoxyethylene fatty acid esters (e.g., polyethylene glycol monolaurate, polyethylene glycol monooleate), polyoxyethylene alkylamine and acetylene glycols (e.g., 2,4,7,9-tetramethyl-5-decyne-4,7-diol and adduct of this diol and ethylene oxide or propylene oxide). Of these compounds, polyoxyalkylene alkyl ethers are preferred over the others. The noninonic surfactants as recited above can be used in both the coating Solution A and the coating Solution B. Additionally, they can be used alone or in combination:

The amphoteric surfactants may be any of amino acid types, carboxyammonium betaine types, sulfonammonium betaine types, ammoniumsulfate betaine types or imidazolium betaine types, with suitable examples including those described in U.S. Patent No. 3,843,368, JP-A-59-49535, JP-A-63-236546, JP-A-5-303205, JP-A-8-262742, JP-A-10-282619, Japanese Patent Nos. 2,514,194 and 2,759,795 and JP-A-2000-351269. Of these amphoteric surfactants, those of amino acid types, carboxyammonium betaine types and sulfonammonium betaine types are preferred over the others. They may be used alone or in combination.

Examples of anionic surfactants usable therein include fatty acid salts (e.g., sodium stearate, potassium oleate), alkylsulfate salts (e.g., sodium laurylsulfate, triethanolamine laurylsulfate), sulfonic acid salts (e.g., sodium dodecylbenzenesulfonate), alkylsulfosuccinic acid salts (e.g., sodium dioctylsulfosuccinate), alkyl diphenyl ether disulfonic acid salts and alkylphosphoric acid salts.

Examples of the cationic surfactants usable therein include alkylamine salts, quaternary ammonium salts, pyridinium salts and imidazolium salts.

Examples of the fluorine-containing surfactants usable therein include compounds derived via perfluoroalkyl group-containing intermediates by use of a method, such as an electrolytic fluorination, telomerization or oligomerization.

More specifically, those compounds include perfluoroalkylsulfonic acid salts, perfluoroalkylcarboxylic acid salts, perfluoroalkylethylene oxide adducts, perfluoroalkyltrialkylammonium salts, perfluoroalkyl group-containing oligomers and perfluoroalkyl phosphates.

As the silicon-containing surfactants, silicone oils modified by organic groups are suitable. They can take a siloxane structure whose side chains are modified by organic groups, or a siloxane structure modified at one end or both ends. Examples of modification by an organic group include amino modification, polyether modification, epoxy modification, carboxyl modification, carbinol modification, alkyl modification, aralkyl modification, phenol modification and fluoro modification.

The suitable content of surfactants in a coating solution for the ink-receiving layer in the invention is from 0.001 to 2.0 %, preferably from 0.01 to 1.0 %. When two or more coating solutions are used for forming the ink-receiving layer, it is preferable to add surfactants to each of the coating solutions.

For prevention of curling, it is preferable in the invention that the ink-receiving layer contains a high boiling organic solvent. The high boiling organic solvent is a water-soluble or hydrophobic organic compound having a boiling point of 150°C or higher under ordinary pressure, and it may be a liquid or a solid at room temperature and may be a low molecular-weight compound or a high polymer. Examples of such a compound include aromatic carboxylic acid esters (e.g., dibutyl phthalate, diphenyl phthalate, phenyl benzoate), aliphatic carboxylic acid esters (e.g., dioctyl adipate, dibutyl sebacate, methyl stearate, dibutyl maleate, dibutyl fumarate, triethyl acetylcitrate), phosphoric acid esters (e.g., trioctyl phosphate, tricresyl phosphate), epoxy compounds (e.g., epoxidized soybean oil, methyl ester of epoxidized fatty acid), alcohol compounds (e.g., stearyl alcohol, ethylene glycol, propylene glycol, diethylene glycol, triethylene glycol, glycerin, diethylene glycol monobutyl ether (DEGMBE), triethylene glycol monobutyl ether, glycerin monomethyl ether, 1,2,3-butanetriol, 1,2,4-butanetriol, 1,2,4-pentanetriol, 1,2,6-hexanetriol, thiodiglycol, triethanolamine, polyethylene glycol), vegetable oils (e.g., soybean oil, sunflower oil) and higher aliphatic carboxylic acids (e.g., linolic acid, oleic acid).

### (Support)

In the invention, both supports, a transparent support made from a transparent material, such as a plastic, and an opaque support made from an opaque material, such as paper, can be used. From the viewpoint of taking advantage of the transparency of the ink-receiving layer, it is preferable to use a transparent support or a high-gloss opaque support. In addition, it is possible to use as a support a read-only optical disk, such as CD-ROM or DVD-ROM, a write-once optical disk, such as CD-R or DVD-R, or a rewritable optical disk and to provide the ink-receiving layer on a label side of the disk.

Materials suitable for use as the transparent support are transparent materials having a property of being able to resist the radiant heat from an overhead projector or a backlight display. Suitable examples of transparent materials having such a property include polyesters, such as polyethylene terephthalate (PET); polysulfone, polyphenylene oxide, polyimide, polycarbonate and polyamide. Of these materials, polyesters, especially polyethylene terephthalate, are preferred over the others.

Such transparent supports have no particular restriction as to their thickness, but it is preferable from the viewpoint of easy handling that their thickness is within the range of 50 to 200 µm.

Materials suitable as the high-gloss opaque support are those having glossiness of 40% or higher at the surface of the side on which the ink-receiving layer is provided. Herein, the glossiness is a value determined in accordance with the method defined by JIS P-8142 (the method of testing 75-degree specular glossiness of paper and paperboard). Examples of such an opaque support include the following:
namely, high-gloss paper supports, such as art paper, coated paper, cast-coated paper and baryta paper used as a support for silver-salt photography; high-gloss films prepared by adding white pigment to plastic films, such as polyester films including polyethylene terephthalate film, cellulose ester films including nitrocellulose film, cellulose acetate film and cellulose acetate butyrate film, polysulfone films, polyphenylene oxide films, polyimide films, polycarbonate films and polyamide films, to give them opacity (and, if desired, subjecting the films to surface calendering treatment); and supports prepared by providing polyolefin coatings, wherein white pigment may be incorporated or not, on various types of paper supports, transparent supports as recited above or high-gloss films containing white pigment.

Additionally, it is also appropriate to use a film of white pigment-containing polyester foam (e.g., PET foam prepared by incorporating fine particles of polyolefin into PET and drawing PET to form voids therein). Moreover, resin-coated paper used in photographic paper for silver-salt photography is also suitable as the opaque support.

Such opaque supports have no particular restriction as to their thickness, but it is preferable from the viewpoint of easy handling that their thickness is in the range of 50 to 300 µm.

Further, the support surface may be subjected to corona discharge treatment, glow discharge treatment, flame treatment or ultraviolet irradiation treatment in order to improve its wetting characteristics and adhesiveness.

Next, base paper used for the resin-coated paper is described in detail.

The base paper is mainly made from wood pulp. In the wood pulp, synthetic pulp such as polypropylene or synthetic fiber such as nylon or polyester may be mixed, if needed. As the wood pulp, any of LBKP, LBSP, NBKP, NBSP, LDP, NDP, LUKP and NUKP can be used, but it is preferable to use wood pulp rich in short fibers, such as LBKP, NBSP, LBSP, NDP and LDP, in higher proportions. However, the suitable proportion of LBSP and/or LDP is from 10 mass % to 70 mass %.

Chemical pulp (sulfate pulp or sulfite pulp) is preferably used because its impurity is slight, and pulp with whiteness improved by undergoing bleaching treatment is also used to advantage.

The base paper can contain various additives, including a sizing agent such as a higher fatty acid or an alkylketene dimer, a white pigment such as calcium carbonate or titanium oxide, a paper strength-increasing agent such as starch, polyacrylamide or polyvinyl alcohol, a brightening agent, a moisture retaining agent such as polyethylene glycol, a dispersant and a softening agent such as a quaternary ammonium, as appropriate.

The suitable freeness of pulp used for making paper is from 200 to 500 ml determined with a CSF tester. As to the fiber length after beating, the sum of 24-mesh residue's percentage by mass and 42-mesh residue's percentage by mass defined by JIS P-8207 is preferably from 30 to 70 %. Additionally, the 4-mesh residue's percentage by mass is preferably 20 % or below.

The suitable basis weight of base paper is from 30 to 250 g, particularly preferably from 50 to 200 g. The suitable thickness of base paper is from 40 to 250 µm. The base paper can be made highly smooth by undergoing calendering treatment at the stage of or after making paper. The density of base paper is generally from 0.7 to 1.2 g/m² (JIS P-8118).

Further, it is preferable that the base paper has stiffness of 20 to 200 g under the condition defined by JIS P-8143.

The surface of base paper may be coated with a surface-sizing agent. The surface-sizing agent coated may be the same sizing agent that the base paper can contain.

The suitable pH of the base paper is from 5 to 9, measured in accordance with the hydrothermal extraction method defined by JIS P-8113.

The polyethylene covering the surface and the back of base paper is mainly low-density polyethylene (LDPE) and/or high-density polyethylene (HDPE). Further, LLDPE and polypropylene may be used as a portion of polyethylene.

As to the ink-receiving layer-side polyethylene layer in particular, it is preferable that the opacity, whiteness and color hue of the polyethylene layer are improved by addition of rutile- or anatase-type titanium oxide, a brightening agent and ultramarine as is often in the case of photographic paper. The suitable content of titanium oxide in the polyethylene is from about 3 to about 20% by mass, preferably from 4 to 13.% by mass. The polyethylene layer's thickness has no particular limitation, but it is preferable that both the surface-side polyethylene layer and the back polyethylene layer have a thickness of 10 to 50 µm. In addition, an undercoat layer may be provided on the polyethylene layer for the purpose of imparting adhesiveness to the ink-receiving layer. The undercoat layer is preferably formed from aqueous polyester, gelatin or PVA, and the thickness thereof is preferably from 0.01 to 5 µm.

The polyethylene-coated paper may be used as calendered paper, or it may be used as matte paper prepared in a process that, while applying polyethylene to base paper by melt extrusion coating, the so-called impress treatment is given to the polyethylene applied to render the polyethylene surface matte as is familiar in the case of photographic paper.

The support may he provided with a backing layer, and the backing layer can contain various additives including white pigment and water-based binder.

Examples of the white pigment containable in the backing layer include white inorganic pigments, such as precipitated calcium carbonate, ground calcium carbonate, kaolin, talc, calcium sulfate, barium sulfate, titanium dioxide, zinc oxide, zinc sulfate, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrohalloysite, magnesium carbonate and magnesium hydroxide; and organic pigments, such as styrene plastic pigment, acrylic plastic pigment, polyethylene microcapsules, urea resin and melamine resin.

Examples of the water-based binder usable in the backing layer include water-soluble high polymers, such as styrene-maleate copolymer, styrene-acrylate copolymer, polyvinyl alcohol, silanol-modified polyvinyl alcohol, starch, cationic starch, casein, gelatin, carboxymethyl cellulose, hydroxyethyl cellulose and polyvinyl pyrrolidone; and water-dispersible high polymers, such as styrene-butadiene latex and acrylic emulsion.

Examples of other ingredients containable in the backing layer can contain include a defoaming agent, an antifoaming agent, a dye, a brightening agent, an antiseptic and a water resistance imparting agent.

### (Preparation of ink-jet recording material)

The ink-jet recording material according to the invention has no particular restriction as to the method of providing an ink-receiving layer, but the coating methods hitherto known can be used for providing the ink-receiving layer. For instance, the ink-receiving layer can be provided using an extrusion coater, an air doctor coater, a blade coater, a rod coater, a knife coater, a squeegee coater, a reverse roll coater or a bar coater. The ink-receiving layer provided on a support may have the form of a single layer, or may take a multilayer structure. And it may further have an ink solvent absorbing layer, an interlayer and a protective layer. It is allowable to make the inorganic mordant used in the invention be present throughout the ink-receiving layer or be present in the vicinity of the ink-accepting surface.

In addition, it is preferable to form the ink-receiving layer, e.g., in the following process (wet-on-wet process): Specifically, a first coating solution containing at least a particulate substance and a water-soluble resin (referred to as "coating Solution A", too) is coated on a support surface, and further thereto a second coating solution containing at least a basic compound and being adjusted to pH 7.1 or higher (referred to as coating Solution B, too) is applied (1) simultaneously with the coating or (2) during drying of the coating layer formed with the coating Solution A and before the coating layer shows a drying shrinkage speed, and then the second coating solution-applied coating layer is cured by cross-linking.

Herein, it is preferable that the compounds according to the invention, which contain at least two species of di- or higher-valent metal atoms on a per-molecule basis, are incorporated in at least either the coating Solution A or the coating Solution B, especially in the coating Solution A. Additionally, the metal-containing compounds according to the invention can also be formed using the method in which part of the compounds containing di- or higher-valent metals capable of forming the present metal-containing compounds is incorporated into the first coating solution (coating Solution A), the remainder of the compounds containing di- or higher-valent metals is incorporated into the second coating solution (coating Solution B), and both are allowed to react with each other during the double-layer coating described below. Further, it is preferable that the cross-linking agent capable of cross-linking the water-soluble resin can also be incorporated in at least either the coating Solution A or the coating Solution B. And providing the ink-receiving layer cured by cross-linking in the foregoing manner is advantageous from the viewpoints of ink absorption and prevention of film cracking.

In the invention, the coating Solution A for an ink-receiving layer, which contains at least a particulate substance (e.g., vapor-phase process silica) and a water-soluble resin, can be prepared, e.g., in the following manner: Vapor-phase process particulate silica and a dispersant are added to water (so that the particulate silica concentration in water is, e.g., from 10 to 20 % by mass), and dispersed over a period of, e.g., 20 minutes (preferably 10 to 30 minutes) by using a high-speed rotation-type wet colloidal mill (e.g., CLEARMIX made by MTECHNIQUE) under a high-rev condition, e.g., at 10,000 rpm (preferably 5,000 to 20,000 rpm). The resulting dispersion is admixed with a cross-linking agent (a boron compound) and a water solution of polyvinyl alcohol (PVA) (so that the ratio of the PVA to the vapor-phase process silica in the resulting admixture is about 1 /3 by mass), and further admixed with a compound containing at least two species per molecule of di- or higher-valent metal atoms according to the invention, if the addition of this compound to the coating Solution A is desired, and then dispersed under the same condition as described above. The thus prepared coating Solution A is in a sol state. This solution is applied to a support and then dried, thereby forming a porous ink-receiving layer having a three-dimensional reticular structure.

Additionally, the preparation of an aqueous dispersion containing vapor-phase process silica and a dispersant may be performed by preparing in advance an aqueous dispersion of vapor-phase process silica and then adding the aqueous dispersion to an aqueous solution of dispersant, or by adding an aqueous solution of dispersant to the aqueous dispersion of vapor-phase process silica, or by mixing them simultaneously. Alternatively, a powder of vapor-phase process silica is used instead of the aqueous dispersion, and the powder may be added to an aqueous solution of dispersant in the foregoing manner.

After mixing the vapor-phase process silica and the dispersion agent, the resulting mixture is subjected to micro-granulation treatment with a dispersing machine and thereby made into an aqueous dispersion having an average microgranule size of 50 to 300 nm. Examples of a dispersing machine usable herein include a dispersing machine of high-speed rotation type, a dispersing machine of medium agitation type (e.g., a ball mill, a sand mill), an ultrasonic dispersing machine, a colloid mill-type dispersing machine and a high-pressure dispersing machine. From the viewpoint of efficiently dispersing flocculates formed, an agitation-type dispersing machine, a colloid mill-type dispersing machine and a high-pressure dispersing machine are preferred over the others.

As a solvent in each step, water, an organic solvent and a mixture thereof can be used. Examples of the organic solvent usable in the coating process include alcohol compounds such as methanol, ethanol, n-propanol, i-propannol and methoxypropanol, ketones such as acetone and methyl ethyl ketone, tetrahydrofuran, acetonitrile, ethyl acetate and toluene.

As the dispersant, on the other hand, a cationic polymer can be used. Examples of such a cationic polymer include the organic mordants as recited above. In addition, silane coupling agents can be preferably used as the dispersant.

The suitable amount of the dispersant added is from 0.1 % to 30 %, preferably from 1 % to 10%, to the amount of the particulate substance used.

After forming the ink-receiving layer on a support, it is possible to enhance the surface smoothness, glossiness, transparency and strength of the ink-receiving layer by subjecting the ink-receiving layer to a calendering treatment with a super calender or a gloss calender, wherein the ink-receiving layer is passed through roll nips under heated and pressurized conditions. However, the calendering treatment sometimes leads up to a drop in porosity (or a drop in ink absorbency), so it is required to set the calendering condition causing a slight drop in porosity.

The suitable roll temperature in performing the calendering treatment is from 30 to 150°C, preferably from 40 to 100°C.

And the suitable linear pressure between rolls during the calendering treatment is from 50 to 400 kg/cm, preferably from 100 to 200 kg/cm.

In the case of ink-jet recording, it is required to determine the layer thickness of an ink-receiving layer in relation to the porosity in the layer, because the layer is required to have an absorptive capacity high enough to absorb all of ink drops. In a case where the quantity of ink is 8 nL/mm² and the porosity is 60%, for instance, the ink-receiving layer is required to have a thickness of at least about 15 µm.

In view of the foregoing point, it is preferable in the case of ink-jet recording that the thickness of the ink-receiving layer is in the range of 10 to 50 µm.

The suitable diameter of pores in the ink-receiving layer is from 0.005 to 0.030 µm, preferably from 0.01 to 0.025 µm, in terms of median diameter.

The porosity and the mediam diameter of pores can be measured-with a mercury porosimeter (Poresizer 9320-PC2, trade name, a product of Shimadzu Corporation).

Further, it is desirable that the ink-receiving layer has excellent transparency. One measure of the transparency is what haze value the ink-receiving layer has when it is formed on a transparent support, and the haze value is preferably 30 % or below, far preferably 20 % or below.

The haze value can be measured with a hazemeter (HGM-2DP made by SUGA TEST INSTRUMENTS Co., Ltd.).

To a constituent layer (e.g., an ink-receiving layer or a backing layer) of the ink-jet recording material according to the invention, a dispersion of particulate polymer may also be added. This dispersion is used for the purpose of improving physical properties of the layer, specifically for stabilization of dimensions and prevention of curling, adhesion and cracking. The description of particulate-polymer dispersions can be found in JP-A-62-245258 and JP-A-10-228076. Additionally, the addition of a dispersion of particulate polymer having a low glass transition temperature (40°C or below) to the mordant-containing layer makes it possible to prevent the layer from cracking and curling. And the prevention of curling can also be effected by addition of a dispersion of particulate polymer having a high glass transition temperature to the backing layer.

Ink-jet recording materials according to the invention can be produced also using the methods described in TP-A-10-81064, JP-A-10-119423, JP-A-10-157277, JP-A-10-217601, JP-A-11-348409, JP-A-2001-138621, JP-A-2000-43401, JP-A-2000-211235, JP-A-2000-309157, JP-A-2001-96897, JP-A-2001-138627, JP-A-11-91242, JP-A-8-2087, JP-A-8-2090, JP-A-2091 and JP-A-8-2093.

On the support, an undercoat layer may be provided for purposes of increase in adhesion of the support to the ink-receiving layer and proper adjustment of electric resistance.

Incidentally, the ink-receiving layer may be provided on one side of the support, or may be provided on both sides of the support for the purpose of preventing deformations, inclusive of curling. In a case where the recording medium is used for OHP and has the ink-receiving layer on only one side of the support, an antireflective coating can be provided on the other side or either side of the support for the purpose of heightening light transmission.

Further, boric acid or a boron compound can be coated on the side of the support to face the ink-receiving layer, and on this coating the ink-receiving layer may be formed. By doing so, the glossiness and surface smoothness can be ensured for the ink-receiving layer, and besides, the ageing-induced blur of images, which is attributed to storage under high temperature and humidity conditions after printing, can be controlled.

### (Ink-jet recording method)

The ink-jet recording in the invention is not particularly restricted as to the recording system, but can be performed using any of known systems, including a charge control system utilizing electrostatic induction force for jetting ink, a drop-on-demand system utilizing vibration pressure of piezoelectric element (pressure pulse system), an acoustic ink-jet system in which ink is irradiated with acoustic beams converted from electric signals and jetted by utilizing the radiation pressure, and a thermal jet system utilizing the pressure generated by formation of bubbles when ink is heated. In the ink-jet recording systems are further included a system of jetting many drops of low-concentration ink, or the so-called photo ink, at small volumes, a system of improving image quality by use of two or more varieties of ink which are of substantially same hue but different in concentration, and a system of using colorless and transparent ink.

### EXAMPLES

The first invention will now be illustrated in more detail by reference to the following examples, but these examples should not be construed as limiting the scope of the invention. Additionally, all parts and percentages in the examples are by mass unless otherwise indicated.

### (Preparation of Support)

Wood pulp constituted of 100 parts of LBKP was beaten to Canadian freeness of 300 ml by means of a double disk refiner, and admixed with 0.5 parts of epoxidized behenic acid amide, 1.0 parts of anionic polyacrylamide, 0.1 parts of polyamidopolyamine epichlorohydrin and 0.5 parts of cationic polyacrylamide. Herein, the amounts of the additives used were each expressed in terms of the bone dry mass ratio to the pulp. The resulting mixture was made into raw paper having a basis weight of 170 g/m² by means of a Fourdrinier paper machine.

In order to adjust the surface size of the raw paper obtained, the raw paper was impregnated with a 4 % aqueous polyvinyl alcohol solution containing 0.04 % of a brightening agent (Whitex BB, produced by Sumitomo Chemical Co., Ltd.) so that the amount of the surface size reached 0.5 g/m² in terms of the bone dry mass, and then dried, and further subjected to calendering treatment. Thus, a base paper having a density adjusted to 1.05 g/ml was prepared.

The thus obtained base paper was subjected to corona discharge treatment on the wire face side (the back), and thereon high-density polyethylene was coated in a thickness of 19 µm by means of a melt extrusion machine to form a matte resin layer (the surface of which was hereinafter referred to as the back). Further, the resin layer as the back was subjected to corona discharge treatment, and then coated with an aqueous dispersion as an antistatic agent, which was prepared by dispersing aluminum oxide (Alumina Sol 100, produced by NISSAN CHEMICAL INDUSTRIES LTD.) and silicon dioxide (Snowtex O, produced by NISSAN CHEMICAL INDUSTRIES LTD.) into water at a ratio of 1:2 by mass, so that the coverage of the antistatic agent reached 0.2 g/m² on a dry mass basis.

Furthermore, the base paper was subjected to corona discharge treatment on the felt face (surface) side where the resin layer was not provided and then, on the thus treated surface of the base paper, low-density polyethylene having MFR (melt flow rate) of 3.8 and containing 10 % of anatase-type titanium dioxide, a trace amount of ultramarine and 0.01 % of a brightening agent (wherein the proportions of these additives are based on the polyethylene) was extruded in a thickness of 29 µm by means of a melt extrusion machine to form a high-gloss thermoplastic resin layer (this high-gloss surface was hereinafter referred to as the front surface). Thus, a support was prepared.

### (Preparation of Coating Solution A for Ink-receiving Layer)

Ingredients of the following composition, (a) vapor-phase process particulate silica, (b) ion exchange water and (c) SHALLOL DC-902P, were mixed and dispersed with a beads mill (KD-P, made by Shinmaru Enterprises Corporation), and then thereto a solution containing the remainder ingredients ; (d) polyvinyl alcohol, (e) boric acid, (f) polyoxyethylene lauryl ether and (g) ion exchange water, was added to prepare a coating Solution A for ink-receiving layer.

Herein, the ratio of the particulate silica to the water-soluble resin (P/B ratio=(a):(d)) was 4.5:1 by mass, and the coating Solution A for ink-receiving layer was acidic and the pH thereof was 3.5.

**<Composition of Coating Solution A for Ink-receiving Layer>**

| | |
|---|---|
| (a) Vapor-phase particulate silica | 10.0 parts |
| (inorganic fine particles) | |
| (Rheolosil QS-30, produced by | |
| TOYUYAMA Corp., average primary | |
| particle size: 7 nm) | |
| (b) Ion exchange water | 51.6 parts |
| (c) SHALLOL DC-902P (51% aqueous solution) | 1.0 parts |
| (a dispersant, produced by Nitto Boseki | |
| Co., Ltd.) | |
| (d) Polyvinyl alcohol (8% aqueous solution) | 27.8 parts |
| (a water-soluble resin, PVA124, | |
| produced by KURARAY CO., LTD., | |
| saponification degree: 98.5 %, | |
| polymerization degree: 2,400) | |
| (e) Boric acid (cross-linking agent) | 0.4 parts |
| (f) Polyoxyethylene lauryl ether | 1.2 parts |
| (a surfactant, Emulgen 109P (10% | |
| aqueous solution), produced by | |
| Kao Corporation, HLB value: 13.6) | |
| (g) Ion exchange water | 33.0 parts |

### (Production of Recording Medium)

The front surface of the support was subjected to corona discharge treatment and then, on the thus treated front surface, the coating Solution A for ink-receiving layer was coated at a coverage of 200 ml/m² by use of an extrusion die coater (coating step). The coating layer was dried at 80°C with a hot-air dryer (air velocity: 3 to 8 m/sec) till it came to have a solids concentration of 20 %. During this period, the coating layer was dried at a constant speed. Immediately afterward, the coating layer was immersed in a mordant Solution B having the following composition for a period of 30 seconds, thereby forming a deposition of 20 g/m² on the coating layer (mordant solution-applying step). Further, the deposition was dried at 80°C for 10 minutes (drying step). Thus, a recording medium provided with a coloring material receiving layer having a dry thickness of 32 µm was produced.

**<Composition of Mordant Coating Solution B>**

| | |
|---|---|
| (a) Boric acid (cross-linking agent) | 0.65 parts |
| (b) Polyallylamine PAA-03 (20% aqueous | 12.5 parts |
| solution) | |
| (a mordant, produced by Nitto Boseki | |
| Co., Ltd.) | |
| (c) Ion exchange water | 72.0 parts |
| (d) Ammonium chloride (surface pH adjuster) | 0.8 parts |
| (e) Polyoxyethylene lauryl ether | 10 parts |
| (a surfactant, Emulgen 109P (2% aqueous | |
| solution), produced by Kao Corporation, | |
| HLB value: 13.6) | |
| (f) Megafac F1405 (10% aqueous solution) | 2.0 parts |
| (a fluorine-containing surfactant, | |
| produced by DAINIPPON INK AND CHEMICALS, INCORPORATED) | |

Compounds in the invention and compounds for comparison, which are shown in Table 1-2, were each added to the mordant coating Solution B in a proportion of 1 mass % (on a solids basis), thereby preparing mordant coating solutions.

**Table 1-2**

| | Additive | Number of atoms having conjugate π electrons |
|---|---|---|
| No. 1 (comparison) | nothing | - |
| No.2 (comparison) | benzotriazole-5 -carboxylic acid | 9 |
| No.3 (invention) | P-1 | 18 |
| No.4 (invention) | P-29 | 16 |
| No. 5 (invention) | P-35 | 12 |
| No.6 (invention) | P-36 | 10 |

### (Evaluation Tests)

The evaluation tests mentioned below were carried out on each of the present recording media (No.3 to No.6) and the recording media for comparison (No.1 and No.2) obtained in the foregoing manners. The results obtained are shown in Table 1-3.

### <Bronze Evaluation>

Under an environmental condition of 30°C-80% RH, monochromatic images of cyan color were printed on each of the recording media so as to have densities changing stepwise from 0.2 to 2.2 on a 1-to-11 scale by means of each of the ink-jet printers, PM-970 (made by Seiko Epson Corporation) and PIXUS950i (made by Canon Inc.), loaded with their respective genuine ink sets, and evaluated by the bronzing phenomenon occurrence conditions.

Specifically, a case in which no bronzing phenomenon occurred at all in the all density range up to the highest density was graded A, a case in which the bronzing phenomenon occurred in the 8th- to 11 th-step (highest) density range was graded B, and a case in which the bronzing phenomenon occurred even in the 1st-step (lowest) to 7th-step density range was graded C.

### <Ozone Resistance>

Magenta solid images and cyan solid images were printed on each of the recording media by means of each of the ink-jet printers, PM-970 (made by Seiko Epson Corporation) and PIXUS950i (made by Canon Inc.), loaded with their respective genuine ink sets, and stored for 24 hours in an environment that the ozone concentration was adjusted to 2.5 ppm. The magenta densities and the cyan densities were measured with a reflection densitometer (Xrite938, made by Xrite Inc.) before and after storage, and the residual density rates of magenta and cyan images were calculated.

A case where the residual density rate was 80% or above was graded A, a case where the residual density rate was from 70 % to lower than 80% was graded B, a case where the residual density rate was from 60 % to lower than 70 % was graded C, and a case where the residual density rate was lower than 60 % was graded D.

### <Light Resistance>

Under an environmental condition of 25°C-32% RH, magenta and cyan solid images were printed on each of the recording media by means of each of the ink-jet printers, PM-970 (made by Seiko Epson Corporation) and PIXUS950i (made by Canon Inc.), loaded with their respective genuine ink sets, and then exposed to D65 light in an illumination of 85,000 lux via a filter cutting ultraviolet rays of wavelengths shorter than 365 nm over a time period of 3.8 hours by means of a weatherometer (Xenon Weather-O-Meter Ci65A, made by Atlas Electric Devices Co., USA). Thereafter, the lamp was switched off and the recording media was allowed to stand for 1 hour under an environmental condition of 20°C-91% RH. This exposure-standing cycle was repeated over 168 hours. The densities of each color image before and after this test were measured with a reflection densitometer (Xrite938, made by Xrite Inc.), and the residual density rate of each color was calculated.

A case where the residual density rate was 90% or above was graded A, a case where the residual density rate was from 80 % to lower than 90% was graded B, a case where the residual density rate was from 70 % to lower than 80 % was graded C, and a case where the residual density rate was lower than 70 % was graded D.

**Table 1-3**

| | | | No.1 (comparison | No.2 (comparison) | No.3 (invention) | No.4 (invention) | No.5 (invention) | No.6 (invention) |
|---|---|---|---|---|---|---|---|---|
| EPSON PM 970C | Bronze evaluation | | C | C | A | A | A | A |
| | Ozone resistance | Magenta | D | D | B | B | B | B |
| | | Cyan | C | C | B | B | B | B |
| | Light resistance | Magenta | D | D | C | C | C | C |
| | | Cyan | A | A | A | A | A | A |
| CANON PIXUS 950i | Bronze evaluation | | B | B | A | A | A | A |
| | Ozone resistance | Magenta | C | C | A | A | A | A |
| | | Cyan | C | C | B | B | B | B |
| | Light resistance | Magenta | D | D | C | C | C | C |
| | | Cyan | A | A | A | A | A | A |

As can be seen from the results shown in Table 1-3, the present recording media containing Compound P-1, Compound P-29, Compound P-35 and Compound P-36 respectively, wherein greater than 10 atoms having conjugate π electrons are present on a per-molecule basis, achieved the prevention of bronzing phenomenon even in the printed areas of high cyan densities. Further, the images printed on these recording media showed high residual density rates even after the long-term storage under the condition of high ozone concentration, so the present recording sheets have proved superior in ozone resistance. In addition, the residual density rates of the images formed were also high even after the test by repeated cycles of xenon irradiation and standing in a highly humid environment, so the present recording sheets have proved of excellent light resistance, too.

On the other hand, the comparative recording medium in which any compound according to the invention was not used showed the bronzing phenomenon in the printed areas of high cyan densities, and the addition of benzotriazole-5-carboxylic acid, in which the number of atoms having conjugate π electrons is 9, has proved insufficient in preventing the occurrence of the bronzing phenomenon.

### Industrial Applicability

The present recording medium (first invention) characterized by containing a substantially colorless compound in which at least 10 atoms having conjugate π electrons are present on a per-molecule basis can ensure high print density and formation of images causing no bronzing phenomenon as they have various excellent properties, including excellent hue and high resistances to light, gases and water. Therefore, the present recording medium can achieve excellent image quality, including high color saturation and excellent reflection density, when used as an ink-jet recording material.

## Claims

1. A recording medium comprising a compound in which at least 10 atoms having conjugate π electrons are present on a per-molecule basis, wherein the compound shows no fluorescence and has a longest-wavelength-side absorption peak λmax at a wavelength of 350 nm or shorter and a molar absorption constant of 10,000 or below at any wavelength within the visible spectral region of 400 to 700 nm and wherein the compound further contains a solubilizing group.

2. A recording medium according to claim 1, wherein the compound has at least two aromatic ring groups.

3. A recording medium according to claim 1 or claim 2, which has an ink-receiving layer provided on a support.

4. A recording medium according to claim 3, which comprises the compound in the ink-receiving layer.

5. A recording medium according to claim 4, wherein the ink-receiving layer further comprises a water-soluble resin.

6. A recording medium according to claim 5, wherein the water-soluble resin is at least one resin selected from polyvinyl alcohol resins, cellulose resins, ether linkage-containing resins, carbamoyl group-containing resins, carboxyl group-containing resins and gelatins.

7. A recording medium according to claim 4, wherein the ink-receiving layer further comprises a cross-linking agent capable of forming cross-links between molecules of the water-soluble resin.

8. A recording medium according to claim 3, wherein the ink-receiving layer further comprises a particulate substance.

9. A recording medium according to claim 8, wherein the particulate substance is at least one substance selected from particulate silica, colloidal silica, particulate alumina and pseudo boehmite.

10. A recording medium according to claim 3, wherein the ink-receiving layer further comprises a mordant.

11. A recording medium according to claim 3, wherein the ink-receiving layer further comprises a compound having at least two species of di- or higher-valent metal atoms per molecule.

12. A recording medium according to claim 1, which is an ink-jet recording material.

13. A method of producing a recording medium according to claim 1, the method comprising
forming a coating layer as an ink-receiving layer by: applying a coating solution containing at least a particulate substance and a water-soluble resin; and curing the applied coating solution by formation of cross-links,
wherein the curing by formation of cross-links is carried out by: adding a cross-linking agent to at least one of the coating solution and a basic solution of pH 7.1 or higher; and applying the basic solution to the coating layer (1) simultaneously with formation of the coating layer by applying the coating solution or (2) during drying of the coating layer formed by applying the coating solution and before the coating layer shows drying shrinkage.

14. A recording medium according to claim 1, wherein the compound is at least one compound selected from the group consisting of compounds P-33, P-34, P-35, P-36, P-37 and P-38.

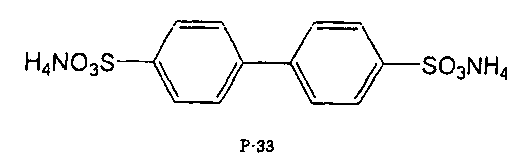

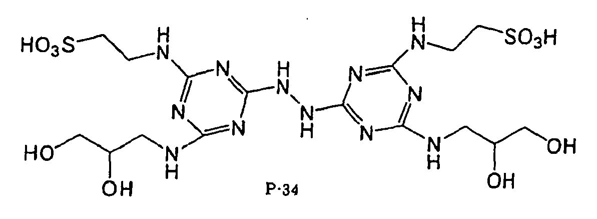

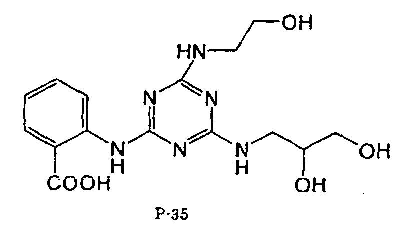

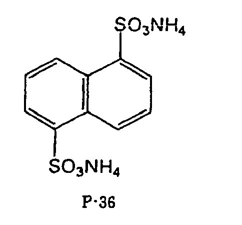

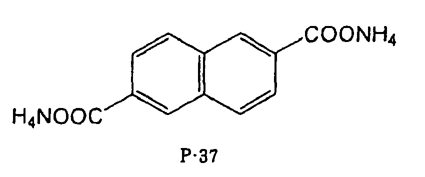

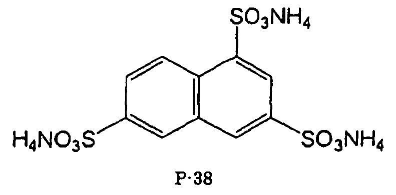

15. A recording medium according to claim 1, wherein the compound is colorless.

## Patentansprüche

1. Aufzeichnungsmedium, umfassend eine Verbindung, in der zumindest 10 Atome, die konjugierte n-Elektronen aufweisen, je Molekül vorliegen, worin die Verbindung keine Fluoreszenz zeigt und einen Absorptionspeak λmax auf der Seite mit der längsten Wellenlänge bei einer Wellenlänge von 350 nm oder kürzer und einen molaren Extinktionskoeffizienten von 10.000 oder kleiner bei Wellenlängen innerhalb des sichtbaren Spektralbereichs von 400 bis 700 nm besitzt, und worin die Verbindung ferner eine Löslichkeits-vermittelnde Gruppe enthält.

2. Aufzeichnungsmedium gemäß Anspruch 1, worin die Verbindung zumindest zwei aromatische Ringgruppen aufweist.

3. Aufzeichnungsmedium gemäß Anspruch 1 oder Anspruch 2, das eine tintenaufnehmende Schicht aufweist, die auf einem Träger vorgesehen ist.

4. Aufzeichnungsmedium gemäß Anspruch 3, das die Verbindung in der tintenaufnehmenden Schicht umfaßt.

5. Aufzeichnungsmedium gemäß Anspruch 4, worin die tintenaufnehmende Schicht ferner ein wasserlösliches Harz umfaßt.

6. Aufzeichnungsmedium gemäß Anspruch 5, worin das wasserlösliche Harz zumindest ein Harz ist, das ausgewählt ist aus Polyvinylalkoholharzen, Celluloseharzen, Harzen, die (eine) Etherbindung(en) enthalten, Harzen, die (eine) Carbamoylgruppe(n) enthalten, Harzen, die (eine) Carboxylgruppe (n) enthalten, und Gelatinen.

7. Aufzeichnungsmedium gemäß Anspruch 4, worin die tintenaufnehmende Schicht ferner ein Vernetzungsmittel umfaßt, das Vernetzungen zwischen Molekülen des wasserlöslichen Harzes erzeugen kann.

8. Aufzeichnungsmedium gemäß Anspruch 3, worin die tintenaufnehmende Schicht ferner eine teilchenförmige Substanz umfaßt.

9. Aufzeichnungsmedium gemäß Anspruch 8, worin die teilchenförmige Substanz zumindest eine Substanz ist, die ausgewählt ist aus teilchenförmigem Silica, kolloidalem Silica, teilchenförmigem Aluminiumoxid und Pseudo-Böhmit.

10. Aufzeichnungsmedium gemäß Anspruch 3, worin die tintenaufnehmende Schicht ferner ein Beizmittel umfaßt.

11. Aufzeichnungsmedium gemäß Anspruch 3, worin die tintenaufnehmende Schicht ferner eine Verbindung umfaßt, die zumindest zwei Spezies von zwei- oder höherwertigen Metallatomen je Molekül aufweist.

12. Aufzeichnungsmedium gemäß Anspruch 1, das ein Tintenstrahl-Aufzeichnungsmedium ist.

13. Verfahren zur Herstellung eines Aufzeichnungsmediums gemäß Anspruch 1, wobei das Verfahren umfaßt:
Bilden einer Beschichtungsschicht als tintenaufnehmende Schicht durch Auftragen einer Beschichtungslösung, die zumindest eine teilchenförmige Substanz und ein wasserlösliches Harz enthält, und Härten der aufgetragenen Beschichtungslösung durch Erzeugen von Vernetzungen,
worin das Härten durch Erzeugung von Vernetzungen durchgeführt wird: durch Zugabe eines Vernetzungsmittels zu zumindest einem von einer Beschichtungslösung und einer basischen Lösung mit einem pH-Wert von 7,1 oder höher; und Auftragen der basischen Lösung auf die Beschichtungsschicht (1) simultan mit der Bildung der Beschichtungsschicht durch Auftragen der Beschichtungslösung oder (2) während des Trocknens der Beschichtungsschicht, die durch Auftragen der Beschichtungslösung gebildet ist, und bevor die Beschichtungsschicht eine Trocknungsschrumpfung zeigt.

14. Aufzeichnungsmedium gemäß Anspruch 1, worin die Verbindung zumindest eine Verbindung ist, die ausgewählt ist aus der Gruppe bestehend aus den Verbindungen P-33, P-34, P-35, P-36, P-37 und P-38.

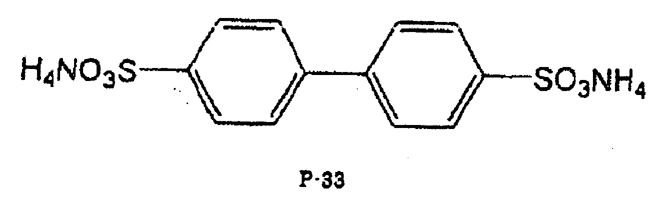

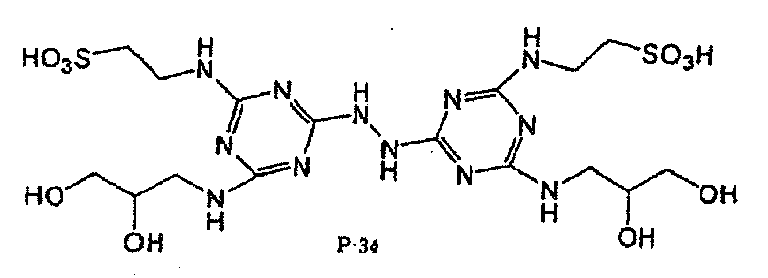

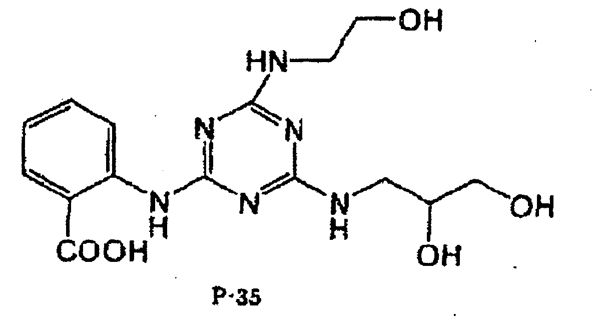

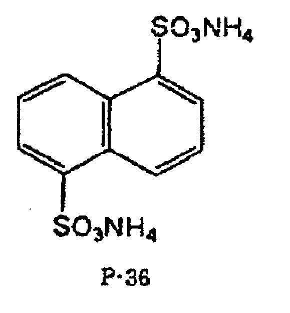

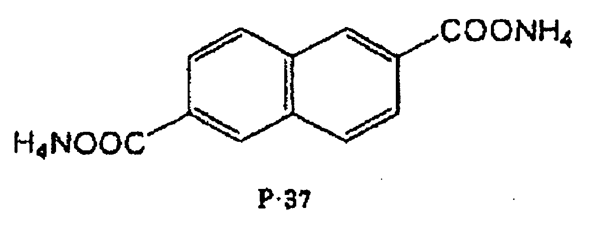

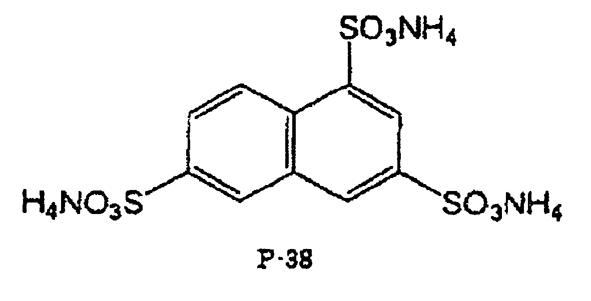

15. Aufzeichnungsmedium gemäß Anspruch 1, worin die Verbindung farblos ist.

## Revendications

1. Support d'enregistrement comprenant un corps composé dans lequel au moins 10 atomes ayant π électrons conjugués sont présents sur une base par molécule, dans lequel le corps composé ne montre pas de fluorescence et possède un pic d'absorption du côté de la longueur d'onde la plus longue λmax à une longueur d'onde de 350 nm ou moins, et une constante d'absorption molaire de 10 000 ou moins à une longueur d'onde quelconque à l'intérieur de la région de spectre visible de 400 à 700 nm, et dans lequel le corps composé contient par ailleurs un groupe de solubilisation.

2. Support d'enregistrement selon la revendication 1, dans lequel le corps composé possède au moins deux groupes avec noyau aromatique.

3. Support d'enregistrement selon la revendication 1 ou la revendication 2, qui comprend une couche de réception d'encre réalisée sur un support.

4. Support d'enregistrement selon la revendication 3, qui comprend le corps composé dans la couche de réception d'encre.

5. Support d'enregistrement selon la revendication 4, dans lequel la couche de réception d'encre comprend par ailleurs une résine hydrosoluble.

6. Support d'enregistrement selon la revendication 5, dans lequel la résine hydrosoluble est au moins une résine sélectionnée parmi des résines d'alcool polyvinylique, des résines de cellulose, des résines contenant une liaison éther, des résines contenant un groupe carbamoyl, des résines contenant un groupe carboxyl, et des gélatines.

7. Support d'enregistrement selon la revendication 4, dans lequel la couche de réception d'encre comprend un argent de réticulation capable de former des liaisons réticulées entre des molécules de la résine hydrosoluble.

8. Support d'enregistrement selon la revendication 3, dans lequel la couche de réception d'encre comprend par ailleurs une substance particulaire.

9. Support d'enregistrement selon la revendication 8, dans lequel la substance particulaire est au moins une substance sélectionnée parmi de la silice particulaire (farine de quartz), de la silice colloïdale, de l'alumine particulaire et de la pseudo boehmite.

10. Support d'enregistrement selon la revendication 3, dans lequel la couche de réception d'encre comprend par ailleurs un mordant.

11. Support d'enregistrement selon la revendication 3, dans lequel la couche de réception d'encre comprend par ailleurs un corps composé ayant au moins deux espèces d'atomes de métal - de valence double, ou plus - par molécule.

12. Support d'enregistrement selon la revendication 1, qui est un matériau pour un enregistrement à jet d'encre.

13. Procédé de fabrication d'un support d'enregistrement selon la revendication 1, le procédé comprenant une étape consistant à :
former une couche de revêtement sous la forme d'une couche de réception d'encre en : appliquant une solution de revêtement contenant au moins une substance particulaire et une résine hydrosoluble ; et en faisant durcir la solution de revêtement appliquée par la formation de liaisons réticulées,
dans lequel la polymérisation par formation de liaisons doubles est exécutée en : ajoutant un agent de réticulation à au moins une de la solution de revêtement et d'une solution basique de pH 7,1 ou plus ; et en appliquant la solution basique sur la couche de revêtement (1) en même temps que la couche de revêtement est formée par application de la solution de revêtement ou (2) durant le séchage de la couche de revêtement formée en appliquant la solution de revêtement et avant que la couche de revêtement ne présente un retrait du au séchage.

14. Support d'enregistrement selon la revendication 1, dans lequel le corps composé est au moins un corps composé sélectionné dans le groupe comprenant des corps composé P-33, P-34, P-35, P-36, P-37 et P-38 :

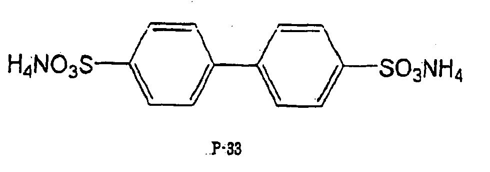

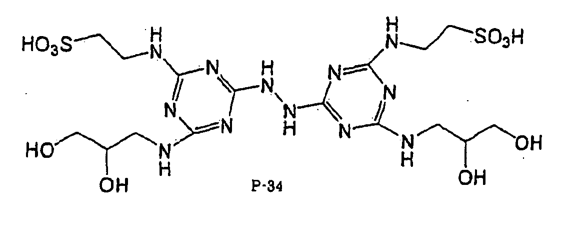

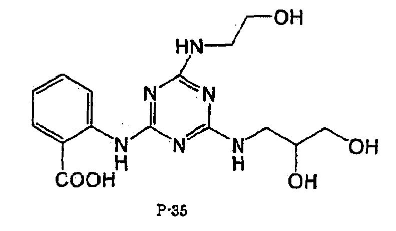

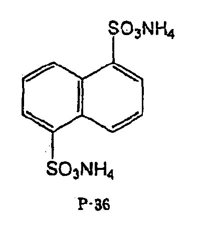

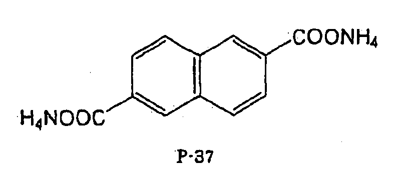

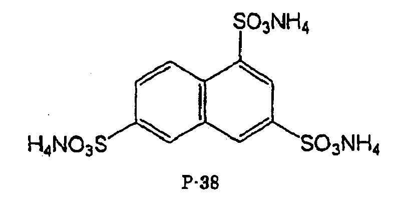

15. Support d'enregistrement selon la revendication 1, dans lequel le corps composé est incolore.
